# EUROPEAN PATENT SPECIFICATION

(11) **EP 3 850 058 B1**
(45) Date of publication and mention of the grant of the patent: **11.02.2026**
(21) Application number: 19769149.6
(22) Date of filing: 13.09.2019
(51) Int. Cl.: C09K 11/77, C09K 11/02, H05B 33/14, H05B 33/18

(54) **METHOD FOR TREATING A LUMINESCENT MATERIAL COMPRISING ORGANIC LIGANDS**
VERFAHREN ZUR BEHANDLUNG EINES LUMINESZIERENDEN MATERIALS MIT ORGANISCHEN LIGANDEN
PROCÉDÉ DE TRAITEMENT D'UN MATÉRIAU LUMINESCENT COMPRENANT DES LIGANDS ORGANIQUES

(30) Priority: 14.09.2018 EP 18194535; 14.09.2018 EP 18194532; 22.01.2019 EP 19153094
(43) Date of publication of application: 21.07.2021
(73) Proprietor: Seaborough Materials IP B.V., 1098 XG Amsterdam (NL)
(72) Inventor: KRAMES, Michael, Palo Alto, California 94306 (US); VAN DE HAAR, Marie Anne, 1381 HL Weesp (NL); BERENDS, Anne Claire, 3551 TJ Utrecht (NL)
(74) Representative: Hoyng Rokh Monegier B.V.
(86) International application number: PCT/EP2019/074572
(87) International publication number: WO 2020/053429

(56) References cited:
- EP-A1- 3 255 119
- US-A1- 2006 054 863
- US-A1- 2010 159 249
- GUPTA SANTOSH K. ET AL: "Intense red emitting monoclinic LaPO 4 :Eu 3+ nanoparticles: host-dopant energy transfer dynamics and photoluminescence properties", RSC ADVANCES, vol. 5, no. 72, 1 January 2015 (2015-01-01), GB, pages 58832 - 58842, XP055926977, ISSN: 2046-2069, DOI: 10.1039/C5RA09076H
- EVELYN L. ROSEN ET AL: "Exceptionally Mild Reactive Stripping of Native Ligands from Nanocrystal Surfaces by Using Meerwein's Salt", ANGEWANDTE CHEMIE INTERNATIONAL EDITION, vol. 51, no. 3, 16 January 2012 (2012-01-16), pages 684 - 689, XP055132105, ISSN: 1433-7851, DOI: 10.1002/anie.201105996
- WILEY-VCH 2011 ET AL: "Supporting Information Exceptionally Mild Reactive Stripping of Native Ligands from Nanocrystal Surfaces by Using Meerweins Salt**", 6 December 2011 (2011-12-06), pages 1 - 15, XP055560631, Retrieved from the Internet <URL:https://onlinelibrary.wiley.com/action/downloadSupplement?doi=10.1002/anie.201105996&file=anie_201105996_sm_miscellaneous_information.pdf> [retrieved on 20190222], DOI: https://doi.org/10.1002/anie.201105996

## Description

### FIELD OF THE INVENTION

The invention relates to a method for treating a luminescent material comprising organic ligands and to methods for preparing a luminescent composition methods. The invention also relates to a luminescent material and a luminescent composition obtainable by the methods according to the invention, and uses thereof.

### BACKGROUND OF THE INVENTION

Luminescent materials, for instance if in the form of nanoparticles, may comprise organic ligands. Nanoparticles are most often synthesized in solution, wherein the growth and final size can be controlled. To prevent clustering during or after synthesis and to have additional means to control the growth, it is very common to bind 'organic ligands' or 'capping molecules' to the surface of the nanoparticles. These are organic molecules, that either by their electrostatic charge or just by their 'bulkiness', or by a combination of these, prevent clustering of the particles.

For certain applications it is desirable to remove the organic ligands from the luminescent material. This is for instance the case, if it is aimed to allow non-radiative energy transfer (sometimes also referred to as Fluorescent Resonance Energy Transfer, FRET) from a sensitizer material to a light emitting material, in which case these materials should be in close enough proximity.

Although various methods are known in literature to remove or replace organic ligands, it is not a straight-forward process to do so and it can be very dependent on the exact conditions, kind of nanoparticles and organic ligands which method works. Especially in the case of nanoparticle mixtures, with different kinds of particles and/or organic ligands such a selective method is often not desirable. An example of such a selective method is described in Nano Lett., 2011, 11 (12), pp 5356-5361.

A less-selective known method is to use acids, like HCl (typically around 0.1M) to remove the organic ligands. The use of HCl to remove organic ligands is described in Wang et al, Tuning upconversion through Energy Migration in Core-Shell Nanoparticles, Supplementary Information, Nature Materials (2011) 1-35*.* However, strong acids can damage or even dissolve the nanoparticle surface, which results in reduced luminescence efficiencies.

Rosen, E.L., et al., "Exceptionally Mild Reactive Stripping of Native Ligands from Nanocrystal Surfaces by Using Meerwein's Salt", Angewandte Chemie Int. Ed., vol. 51, no. 3, 684-689, DOI: 10.1002/anie.201105996, discloses stripping of native ligands from colloidal nanocrystals by using Meerwein's Salt (Et₃OBF₄).

In view of the above it is an object of the invention to provide method for removing organic ligands from a luminescent material, preferably in the form of nanoparticles, which does not or minimizes damage to the particles and which is less selective, i.e. can be applied to a wide variety of luminescent materials and organic ligands.

In unpublished PCT application no. PCT/EP2018/056660 (WO 2018/167266 A1), the present inventors have described, amongst others, compositions comprising a light emitting material and a sensitizer material, wherein the light emitting material and the sensitizer material are selected such that the sensitizer material has an emission spectrum which overlaps at least partly with one or more excitation bands of the light emitting material and wherein the light emitting material and sensitizer material are so arranged to each other to allow non-radiative energy transfer from the sensitizer material to the light emitting material. This application also describes methods for the preparation thereof.

The skilled person will understand that non-radiative energy transfer (sometimes also referred to as Fluorescent Resonance Energy Tranfer, FRET) from the sensitizer material to the light emitting material involves the non-radiative transfer of energy from an excited sensitizer ion in the sensitizer material to an acceptor (or emitter) ion in the light emitting material. It is evidenced by increased selective excitation of the sensitizer ion in the sensitizer material, resulting in increased emission from an emitter ion in the light emitting material.

The present application discloses further improved luminescent compositions and luminescent materials and further improved methods from the preparation thereof.

### SUMMARY OF THE INVENTION

In a first aspect, the invention provides a method for treating a luminescent material comprising organic ligands in accordance with claim 1, said method comprising contacting said luminescent material with an oxidizing agent.

Contacting the luminescent material comprising organic ligands with the oxidation agent is found to result in oxidation of at least part of the organic ligands. Oxidation of the organic ligands has been found to result in their effective removal from the luminescent material. Without wishing to be bound by any scientific theory it is believed that the oxidation breaks down the organic ligands enabling the residues to dissolve.

If the luminescent material is in the form of nanoparticles, the efficient removal of organic ligands enables to obtain particles which are in close proximity with one another. This is particularly advantageous if it is desired obtain a material which allows non-radiative energy transfer (FRET) from a sensitizer material to a light emitting material.

In a second aspect in accordance with claim 8, the invention provides a method for treating a luminescent material comprising organic ligands, said method comprising:
(a) removing at least part of said organic ligands from the luminescent material in accordance with the first aspect; and
(b) after (a), annealing said luminescent material

In a third aspect in accordance with claim 9, the invention provides a method for preparing a luminescent composition, said method comprising:
(i) providing a first luminescent material and a second luminescent material;
(ii) dispersing said first luminescent material and said second luminescent material in a liquid;
(iii) removing organic ligands from said first luminescent material and/or from said second luminescent material;
(iv) removing said liquid, resulting in a dried product, wherein said removing comprises evaporation; and
(v) annealing said dried product.

There is further provided a luminescent material or composition obtainable by the methods according to any of the aspects of the invention, devices and systems comprising these, and uses thereof.

### BRIEF DESCRIPTION OF THE DRAWINGS

FIGURE 1 provides FTIR spectra of LaPO₄ nanoparticles before and after organic ligand removal. Peaks around 1450 and 2950 cm⁻¹ indicate C-H bending and stretching form the organic ligands respectively.
FIGURE 2 provides emission spectra from LaPO₄:Eu³⁺/LaPO₄:Tb³⁺ mixtures, mixed in a 1 :1 weight ratio. Excitation at 484.5 nm.
FIGURE 3 provides emission spectra from LaPO₄:Eu³⁺/LaPO₄:Tb³⁺ mixtures, mixed in a 1 :1 weight ratio. Excitation at 395 nm.
FIGURE 4 provides excitation spectra from LaPO₄:Eu³⁺/LaPO₄:Tb³⁺ mixtures, mixed in a 1 :1 weight ratio. Emission at 695 nm.
FIGURE 5 shows Tb³⁺ decay in LaPO₄:Eu³⁺/LaPO₄:Tb³⁺ mixtures, mixed in a 1:1 weight ratio. Excitation at 355 nm, emission at 542 nm.
FIGURE 6 provides Eu³⁺ emission spectra from LaPO₄:Eu³⁺ (5%)/LaPO₄:Tb³⁺ (40%) mixtures, mixed in a 1:1 weight ratio, before and after annealing at 600 °C. Excitation in the Tb³⁺, at 484.5 nm.
FIGURE 7 provides Eu³⁺ excitation spectra of LaPO₄:Eu³⁺ (5%)/LaPO₄:Tb³⁺ (40%) mixtures, mixed in a 1:1 weight ratio, before and after annealing at 600 °C. Emission measured at 697 nm. Spectra are normalized to the 395 nm direct Eu³⁺ excitation line.
FIGURE 8 shows a visualization of annealing YAG:Ce nanoparticles.
FIGURE 9 shows a very schematic cross-section of YAG:Ce nanoparticles in the presence of YAG:Eu nanoparticles, before and after annealing.
FIGURE 10 shows a very schematic cross-section of YAG:Ce nanoparticles, before shell growth, after shell growth, and after annealing.
FIGURE 11 shows a very schematical cross-sectional view of YAG:Ce and YAG:Eu nanoparticles which have been subjected to shell growth.
FIGURE 12 shows a very schematic cross-sectional view of YAG:Ce and YAG:Eu nanoparticles which have been subjected to shell growth, before and after annealing.
FIGURE 13 shows a first embodiment of a composition which may be used in the method according to an aspect of the invention.
FIGURE 14 shows a second embodiment of a composition which may be used in the method not according to an aspect of the invention.
FIGURE 15 shows a very schematical cross-sectional view through a nanoparticle which may be used in the method according to an aspect of the invention.
FIGURE 16 shows a very schematical cross-sectional view through a nanoparticle which may be used in the method according to an aspect of the invention.
FIGURE 17 shows a very schematical cross-sectional view through a nanoparticle which may be used in the method according to an aspect of the invention.
FIGURE 18 shows a very schematical cross-sectional view through a nanoparticle which may be used in the method according to an aspect of the invention.
FIGURE 19 shows the overlap of the emission spectrum of Lu₃Al₅O₁₂:Ce (0.65%) (LuAG) (upper trace) as second luminescent material and of excitation bands of LaPO₄:Tb (lower trace) as first luminescent material.
FIGURE 20 shows the overlap of the emission spectrum of Lu₃Al₅O₁₂:Ce (0.65%) (LuAG) (upper trace) as second luminescent material and of excitation bands of Li₃Ba₂(La_{0.6}Eu_{0,4})₃(MoO₄)₈ (lower trace) as first luminescent material.

### DETAILED DESCRIPTION OF THE INVENTION

### First aspect of the invention

The first aspect of the invention provides a method treating a luminescent material comprising organic ligands in accordance with claim 1, said method comprising contacting said luminescent material comprising organic ligands with an oxidizing agent.

### Luminescent material comprising organic ligands

The luminescent material comprising organic ligands is not limited to a particular luminescent material having organic ligands attached to its surface. As is known to the skilled person, ligands can also be referred to as capping molecules (or a capping agent).

As is known to the skilled person, organic ligands are generally used to control growth and to avoid clustering of particles, in particular of nanoparticles. The organic ligands may be any organic ligands suitable for this purpose. Examples of organic ligands include fatty acids (including salts and esters thereof), amines, polyols, for instance oleic acid, oleyl amine, oleate, tributylamine and (poly) ethylene glycol.

The luminescent material is provided in the form of nanoparticles. Any suitable nanoparticles may be used. Suitable nanoparticles include particles of which at least one dimension is at a nanometer scale, preferably ≤ 100 nm. More preferably, the D50 of the nanoparticle diameter is ≥ 1nm and ≤ 50 nm, most preferably ≥ 2nm and ≤ 10 nm. The D50 may suitably be determined using transmission electron microscopy (TEM).

The luminescent material comprises a host lattice which is doped with ions.

Any suitable host lattice may be used. The host lattice may for instance be selected from the group consisting of oxides, fluorides, nitrides, borates, garnets, molybdates, phosphates, vanadates, chlorides, sulfides, selenides, silicates, aluminates, oxyfluorides, fluorosilicates, oxychlorides, oxynitrides, oxysulfides, oxyselenides, fluorochlorides, and fluorobromides or combinations of these or another inorganic host material in which optically active lanthanide ions can be incorporated.

In a preferred embodiment, the host lattice is an oxide, garnet, phosphate, vanadate or combination of these such as Y₂O₃, YVPO₄, YVO₄ or LaPO₄ or Y₃Al₅O₁₂ ("YAG") or Lu₃Al₅O₁₂ ("LuAG").

Any suitable optically active (e.g. luminescent) ion may be used. The host lattice may for instance be doped with one or more ions selected from the group consisting of Eu³⁺, Tb³⁺, Mn⁴⁺, Eu²⁺, Pb²⁺, Bi³⁺ and Ce³⁺, preferably Ce³⁺ or Eu³⁺, Mn⁴⁺ and Tb³⁺, most preferably Eu³⁺ or Ce³⁺.

In a preferred embodiment the luminescent material is a material disclosed herein below as first luminescent material and/or second luminescent material.

### Oxidizing agent

The method according to the first aspect of the invention comprises contacting the luminescent material comprising the organic ligands with an oxidizing agent. Any suitable oxidizing agent may be used. Suitable oxidation agents may include any compound or combination of compounds, in a solution, capable of oxidizing at least part of the organic ligands. Preferably, the oxidation agent is selected such that it is capable of oxidizing carbon present in the carbon chain of the organic ligands. Without wishing to be bound by any scientific theory, it is believed that as a result of the oxidation the organic ligands break down enabling the residues to dissolve and be removed in a simple and efficient manner, preferably using one or more washing steps.

Preferably the oxidizing agent has a standard reduction potential > 1 Volt.

The oxidizing agent may for example be selected from the group consisting of an inorganic peroxide (preferably H₂O₂), Fenton's reagent, nitric acid (HNO₃) and nitrate compounds, sulfuric acid (H₂SO₄), peroxydisulfuric acid (H₂S₂O₈), peroxymonosulfuric acid (H₂SO₅), chlorite, chlorate, perchlorate, and other analogous halogen compounds,
Fluorine (F₂), chlorine (Cl₂), and other halogens, hypochlorite and other hypohalite compounds, hexavalent chromium compounds such as chromic and dichromic acids and chromium trioxide, pyridinium chlorochromate (PCC), and chromate/dichromate compounds, permanganate compounds such as potassium permanganate, sodium perborate, nitrous oxide (N₂O), nitrogen dioxide/dinitrogen tetroxide (NO₂ / N₂O₄), potassium nitrate (KNO₃).

Preferably, the oxidizing agent comprises H₂O₂. Preferably, the oxidizing agent comprises H₂O₂ in combination with NH₄OH or H₂SO₄, more preferably H₂O₂ in combination with NH₄OH. The oxidation agent is present in a solution, preferably an aqueous solution.

### Contacting the luminescent material comprising organic ligands with the oxidizing agent

The luminescent material comprising organic ligands may be contacted with the oxidizing agent in any suitable manner.

The luminescent material comprising organic ligands is contacted with the oxidizing agent in the presence of a solution comprising the oxidizing agent.

Any suitable solution in which the luminescent material comprising the organic ligands may be dispersed may be used. The solution comprises water or an alcohol (preferably methanol or ethanol) or a mixture thereof.

Preferably, the solution comprises NH₄OH, more preferably the solution comprises NH₄OH and H₂O₂. Preferably, the solution comprises NH₄OH and H₂O₂ in a weight ratio between 8 : 1 and 2 : 1 most preferably in a weight ratio of about 3: 1.

Preferably, the solution comprising NH₄OH and H₂O₂ is at a temperature of between 60 and 90 °C, preferably about 70 °C.

In a preferred embodiment, the luminescent material comprising the organic ligands, luminescent material in the form of nanoparticles, is dispersed in a first solution, for instance in water or an alcohol (e.g. methanol or ethanol) or a mixture thereof. The first solution may then be combined with the oxidizing agent and/or with a solution comprising the oxidizing agent. For instance, the oxidizing agent and/or a solution containing the oxidizing agent may be added to the first solution containing the luminescent material.

Contacting the luminescent material comprising the organic ligands with the oxidizing agent may be performed at any suitable temperature and during any suitable period. The skilled person is able to determine optimal conditions. In a preferred embodiment, in particular if the oxidizing agent is H₂O₂ which is present in a NH₄OH solution, contacting the luminescent material comprising the organic ligands with the oxidizing agent may for instance be effected for 15-120 minutes.

### Recovering the luminescent material (from the solution)

The method may comprise separating said luminescent material from the oxidizing agent.

Preferably, the method comprises recovering the luminescent material from the solution. This may be achieved in any suitable manner.

Preferably, recovering the luminescent material from the solution comprises gravity separation (preferably centrifugation) and/or drying by evaporation.

Preferably, recovering the luminescent material from the solution comprises washing the luminescent material using a washing liquid and recovering the luminescent material from the washing liquid. Preferably, recovering the luminescent material from the washing liquid comprises gravity separation (preferably by centrifugation) and/or drying by evaporation.

Preferably, recovering the luminescent material from the solution and/or from the washing liquid comprises at least drying by evaporation. Drying by evaporation may be performed in any suitable manner, for instance in an oven and/or under vacuum.

Preferably the method according to the first aspect of the invention comprises:
(i) providing a luminescent material comprising organic ligands;
(ii) contacting the luminescent material with an oxidizing agent in the presence of a solution comprising the oxidizing agent; and
(iii) recovering the luminescent material from the solution, wherein said recovering comprises
   (a) gravity separation, preferably centrifugation, to separate the luminescent material form at least part of the solution;
   (b) washing the separated luminescent material using a washing liquid; and
   (c) recovering the luminescent material from the washing liquid by gravity separation, preferably centrifugation; and
   (d) drying the luminescent material, preferably in an oven.

### Mixtures comprising a first luminescent material and a second luminescent material

The luminescent material comprising organic ligands is a mixture comprising at least a first luminescent material and a second luminescent material, wherein the first luminescent material and/or the second luminescent material comprise organic ligands. Preferably, the first luminescent material and the second luminescent material comprise organic ligands.

Thus, the mixture comprising at least a first luminescent material and a second luminescent material is contacted with the oxidizing agent. This enables to obtain a luminescent material in which the first luminescent material and second luminescent material are present in close proximity. Such close proximity is particularly advantageous if it is desired to obtain a material which allows energy transfer (FRET) from the second luminescent material (or sensitizer material) to the first luminescent material (light emitting material).

The first luminescent material and second luminescent material are provided in the form of nanoparticles.

Preferably, the first luminescent material and the second luminescent material are selected such that the second luminescent material has an emission spectrum which overlaps at least partly with one or more of excitation bands of the first luminescent material. This is in particular advantageous if it is desired to obtain a material which allows energy transfer (FRET) from the second luminescent material to the first luminescent material. The skilled person will understand that, in this preferred embodiment, the first luminescent material functions as light emitting material and the second luminescent material functions as sensitizer material.

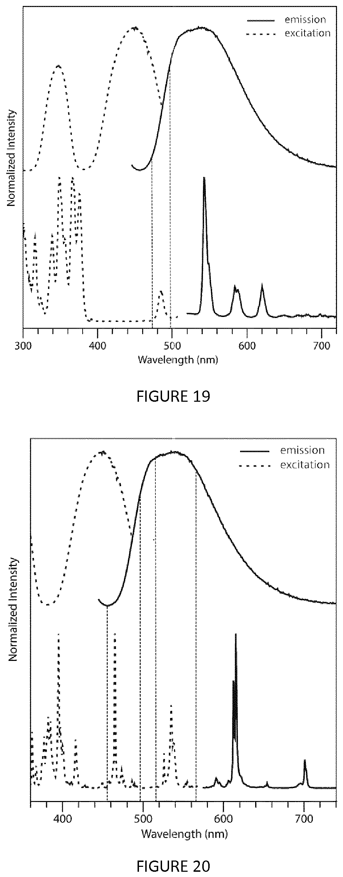

The skilled person is well able to determine the overlap of the spectra based on spectra known in the art or determine the spectra by routine experimentation. For instance, Figure 19 shows the overlap of the emission spectrum of Lu₃Al₅O₁₂:Ce (0.65%) (LuAG) (upper trace) as sensitizer material and of excitation bands of LaPO₄:Tb (lower trace) as emitter material. The area of overlap is indicated between dashed lines. Figure 20 shows the overlap of the emission spectrum of Lu₃Al₅O₁₂:Ce (0.65%) (LuAG) (upper trace) as sensitizer material and of excitation bands of Li₃Ba₂(La_{0,6}Eu_{0,4})₃(MoO₄)₈ (lower trace) as emitter material. The overlapping area is indicated between dashed lines as well.

Preferably, the first luminescent material is a red emitting material. As used herein the term red emitting material refers to a material which, upon suitable excitation, has one or more emission bands between 600 nm and 700 nm. According to alternative embodiments, the first luminescent material is a material having, upon suitable excitation, one or more emission bands between 700 and 1400 nm (IR-A), between 580 and 600 nm (amber and/or orange), between 560 and 580 nm (yellow), between 510-560 nm (green), between 480 and 510 nm (cyan), between 440 and 480 nm (blue), between 400-440 nm (violet), between 315-400 nm (UV-A), or between 280-315 nm (UV-B).

Preferably, the first luminescent material is doped with one or more ions selected from the group consisting of Eu³⁺, Tb³⁺, Mn⁴⁺. Especially preferred is Eu³⁺ or Tb³⁺.

The first luminescent material and second luminescent material may have any suitable host lattice. The host lattice may for instance be selected from the group consisting of oxides, fluorides, nitrides, borates, garnets, molybdates, phosphates, vanadates, chlorides, sulfides, selenides, silicates, aluminates, oxyfluorides, oxychlorides, oxynitrides, oxysulfides, oxyselenides, fluorochlorides, fluorosilicates and fluorobromides or combinations of these or another inorganic host material in which the optically active lanthanide ions can be incorporated.

In a preferred embodiment, the host lattice of the first luminescent material is an oxide, phosphate, vanadate or a combination thereof, for instance Y₂O₃, YVPO₄, YVO₄ or LaPO₄. Preferably, said preferred host lattice of the first luminescent material is doped with one or more ions selected from the group consisting of Eu³⁺ and Tb³⁺.

In case of Eu³⁺ doping, the first luminescent material may for example have a host lattice doped at a doping level of 2-30% Eu³⁺, more preferably 5-15% Eu³⁺. In a preferred embodiment, the first luminescent material has a host lattice doped at a doping level of 5-80% Eu³⁺, more preferably 10-50% Eu³⁺. In case Tb³⁺ doping, the first luminescent material may have a host lattice doped at a doping level of 5-100% Tb³⁺, more preferably 20-50% Eu³⁺.

In an exemplary embodiment, the first luminescent material is selected from the group consisting of (Ca,Sr)Ga2O6:Eu3+ (or Tb3+), (Ca,Sr,Ba)La2Bi2(SiO4)3O:Eu3+ (or Tb3+), (Ca,Sr,Ba)SnO3:Eu3+ (or Tb3+), (Ca,Y,Gd)MoO4:Eu3+ (or Tb3+), (Y,Gd)BO3 (pseudo-vaterite):Eu3+ (or Tb3+), (Y,Tb)SiO5:Eu3+ (or Tb3+), A-La2O3:Eu3+ (or Tb3+), Ba2(SiO4):O2-:Eu3+ (or Tb3+), Ba2MgSi2O7:Eu3+ (or Tb3+), Ba2Y(BO3)2Cl:Eu3+ (or Tb3+), Ba3(PO4)2:Eu3+ (or Tb3+), Ba3Ca3(PO4)4:Eu3+ (or Tb3+), Ba3Gd(BO3)3:Eu3+ (or Tb3+), Ba3Gd2(BO3)4:Eu3+ (or Tb3+), Ba3La2(BO3)4:Eu3+ (or Tb3+), Ba3V2O8:Eu3+ (or Tb3+), Ba3Y2(BO3)4:Eu3+ (or Tb3+), BaB8O13:Eu3+ (or Tb3+), BaBPO5:Eu3+ (or Tb3+), BaFCl:Eu3+ (or Tb3+), BaGd2 O4:Eu3+ (or Tb3+), BaGd4 Si5O17:Sm:Eu3+ (or Tb3+), BaGdB9O16:Eu3+ (or Tb3+), BaLaB9O16:Eu3+ (or Tb3+), BaSO4:Eu3+ (or Tb3+), BaY2F8:Yb:Eu3+ (or Tb3+), BaY2Si3O10:Eu3+ (or Tb3+), BaYB9O16:Eu3+ (or Tb3+), BaZr(BO3)2:Eu3+ (or Tb3+), BaZrO3:Eu3+ (or Tb3+), BaZrO3:Eu3+ (or Tb3+), b-BaB2O4:Eu3+ (or Tb3+), B-Gd2O3:Eu3+ (or Tb3+), Ca2Al(AlSiO7):Eu3+ (or Tb3+), Ca2Gd2(GeO4)2O:Eu3+ (or Tb3+), Ca2Gd8(SiO4)6O2:Eu3+ (or Tb3+), Ca2Gd8Si6O26:Eu3+ (or Tb3+), Ca2La8(SiO4)6O2:Eu3+ (or Tb3+), Ca3(BO3)2:Eu3+ (or Tb3+), Ca3Al2O6:Eu3+ (or Tb3+), Ca3Gd2(BO3)4:Eu3+ (or Tb3+), Ca3La2(BO3)4:Eu3+ (or Tb3+), Ca3Y2(BO3)4:Eu3+ (or Tb3+), Ca4GdO(BO3)3:Eu3+ (or Tb3+), Ca5(PO11)3F:Eu3+ (or Tb3+), Ca5(PO4)3Br:Eu3+ (or Tb3+), Ca5(PO4)3F:(4f-site):Eu3+ (or Tb3+), Ca5(PO4)3F:(6h-site):Eu3+ (or Tb3+), Ca5(PO4)3OH:Eu3+ (or Tb3+), CaBPO5:Eu3+ (or Tb3+), CaF2:Eu3+ (or Tb3+), CaLaB7O13:Eu3+ (or Tb3+), calcite-CaCO3:Eu3+ (or Tb3+), CaO:Eu3+ (or Tb3+), CaSO4:Eu3+ (or Tb3+), CaYO(BO3):Eu3+ (or Tb3+), C-Gd2O3:Eu3+ (or Tb3+), C-Lu2O3:(C2):Eu3+ (or Tb3+), C-Lu2O3:(C3*i* ):Eu3+ (or Tb3+), Cs2NaYF6:Tm:Eu3+ (or Tb3+), C-Sc2O3:Yb:Eu3+ (or Tb3+), C-Y2O3:Eu3+ (or Tb3+), Eu3+ (or Tb3+)[(ttfa)3(phen)]0:Eu3+ (or Tb3+), Gd17.33(BO3)4(B2O5)2O16:Eu3+ (or Tb3+), Gd2BaZnO5:Eu3+ (or Tb3+), Gd2O2(SO4):Eu3+ (or Tb3+), Gd2P4O13:Eu3+ (or Tb3+), Gd3O4Br:Eu3+ (or Tb3+), Gd3PO7:Eu3+ (or Tb3+), Gd3Te2Li3O12:Eu3+ (or Tb3+), Gd8P2O17:Eu3+ (or Tb3+), GdAl3 (BO3)4:Eu3+ (or Tb3+), GdAlO3:Eu3+ (or Tb3+), GdAlO3:Eu3+ (or Tb3+), GdB3O6:Eu3+ (or Tb3+), GdBO3:Eu3+ (or Tb3+), GdGaO3:Eu3+ (or Tb3+), GdOBr:Eu3+ (or Tb3+), GdOCl:Eu3+ (or Tb3+), GdP3O9:Eu3+ (or Tb3+), GdPO4:Eu3+ (or Tb3+), I-CaB2O4:Eu3+ (or Tb3+), InBO3:Eu3+ (or Tb3+), I-SrB2O4:Eu3+ (or Tb3+), KCaGd(PO4)2:Eu3+ (or Tb3+), La26O27(BO3)8:Eu3+ (or Tb3+), La2BaZnO5:Eu3+ (or Tb3+), La2Hf2O7:Eu3+ (or Tb3+), La2O2(SO4):Eu3+ (or Tb3+), La2O2S:Eu3+ (or Tb3+), La2O2S:Eu3+ (or Tb3+), La2W3O12:Eu3+ (or Tb3+), La2Zr3(MoO4)9:Eu3+ (or Tb3+), La3TaO4Cl6:Eu3+ (or Tb3+), La3TaO4Cl6:Eu3+ (or Tb3+), La3WO6Cl3:Eu3+ (or Tb3+), La3WO6Cl3:Eu3+ (or Tb3+), LaAlO3:Eu3+ (or Tb3+), LaAlO3:Eu3+ (or Tb3+), LaB3O6:Eu3+ (or Tb3+), LaBO3:Eu3+ (or Tb3+), LaF3:Eu3+ (or Tb3+), LaF3:Eu3+ (or Tb3+), LaGaO3:Eu3+ (or Tb3+), LaMgB5O10:Eu3+ (or Tb3+), LaOBr:Eu3+ (or Tb3+), LaOCl:Eu3+ (or Tb3+), LaOF:Eu3+ (or Tb3+), LaOI:Eu3+ (or Tb3+), LaP3O9:Eu3+ (or Tb3+), LaPO4:Eu3+ (or Tb3+), LaYO3:Eu3+ (or Tb3+), Li2Lu5O4(BO3)3:Eu3+ (or Tb3+), Li3Ba2La3(MoO4)8:Eu3+ (or Tb3+), Li3La2(BO3)3:Eu3+ (or Tb3+), Li6Gd(BO3)3:Eu3+ (or Tb3+), Li6Y(BO3)3:Eu3+ (or Tb3+), LiCaAlF6:Eu3+ (or Tb3+), LiEu3+ (or Tb3+)Mo2O8:Eu3+ (or Tb3+), LiGd6O5(BO3)3:Eu3+ (or Tb3+), LiGdF4:Eu3+ (or Tb3+), LiGdGeO4:Eu3+ (or Tb3+), LiGdO2:Eu3+ (or Tb3+), LiGdSiO4:Eu3+ (or Tb3+), LiLa2O2BO3:Eu3+ (or Tb3+), LiLaGeO4:Eu3+ (or Tb3+), LiLaO2:Eu3+ (or Tb3+), LiLaP4O12:Eu3+ (or Tb3+), LiLaSiO4:Eu3+ (or Tb3+), LiLuGeO4:Eu3+ (or Tb3+), LiLuO2:Eu3+ (or Tb3+), LiLuSiO4:Eu3+ (or Tb3+), LiScO2:Eu3+ (or Tb3+), LiSr2YO4:Eu3+ (or Tb3+), LiSrAlF6:Eu3+ (or Tb3+), LiSrAlF6:Eu3+ (or Tb3+), LiY6O5(BO3)3:Eu3+ (or Tb3+), LiYF4:Eu3+ (or Tb3+), LiYGeO4:Eu3+ (or Tb3+), LiYO2:Eu3+ (or Tb3+), LiYSiO4:Eu3+ (or Tb3+), Lu2O2(SO4):Eu3+ (or Tb3+), Lu2Si2O7:Eu3+ (or Tb3+)3+ (or Tb3+), Lu3Al5O12:Eu3+ (or Tb3+), Lu3Al5O12:Yb:Eu3+ (or Tb3+), LuBO3:Eu3+ (or Tb3+), LuBO3 (calcite):Eu3+ (or Tb3+), LuOCl:Eu3+ (or Tb3+), LuPO4:Eu3+ (or Tb3+), Mg2Gd8(SiO4)6O2:Eu3+ (or Tb3+), Mg2La8(SiO4)6O2:Eu3+ (or Tb3+), MgO:Eu3+ (or Tb3+), MgSiO3:Eu3+ (or Tb3+), Na3YSi3O9:Eu3+ (or Tb3+), Na6Gd(BO3)3:Eu3+ (or Tb3+), NaGdGeO4:Eu3+ (or Tb3+), NaGdO2:Eu3+ (or Tb3+), NaGdSiO4:Eu3+ (or Tb3+), NaGdSiO4:Eu3+ (or Tb3+), NaLaGeO4:Eu3+ (or Tb3+), NaLaO2:Eu3+ (or Tb3+), NaLaSiO4:Eu3+ (or Tb3+), NaLuGeO4:Eu3+ (or Tb3+), NaLuSiO4:Eu3+ (or Tb3+), NaScO2:Eu3+ (or Tb3+), NaSrLa(VO4)2:Eu3+ (or Tb3+), NaYGeO4:Eu3+ (or Tb3+), NaYSiO4:Eu3+ (or Tb3+), ScBO3:Eu3+ (or Tb3+), ScOCl:Eu3+ (or Tb3+), ScPO4:Eu3+ (or Tb3+), Sr2B2O5:Eu3+ (or Tb3+), Sr2Gd8(SiO4)6O2:Eu3+ (or Tb3+), Sr2La2Zn2O7:Eu3+ (or Tb3+), Sr2La2Zn2O7:Eu3+ (or Tb3+), Sr2LaAlO5:Eu3+ (or Tb3+), Sr3(BO3)2:Eu3+ (or Tb3+), Sr3(PO4)2:Eu3+ (or Tb3+), Sr3(PO4)2:Sm:Eu3+ (or Tb3+), Sr3Gd2(BO3)4:Eu3+ (or Tb3+), Sr3La2(BO3)4:Eu3+ (or Tb3+), Sr3La6(SiO4)6:Eu3+ (or Tb3+), Sr3Y2(BO3)4:Eu3+ (or Tb3+), Sr5(PO4)3F:Eu3+ (or Tb3+), Sr9Ln(VO4)7:Eu3+ (or Tb3+), SrAl2 B2O7:Eu3+ (or Tb3+), SrB4O7:Eu3+ (or Tb3+), SrB6O10:Eu3+ (or Tb3+), SrCO3:Eu3+ (or Tb3+), SrGdAlO4:Eu3+ (or Tb3+), SrHfO3:Tm:Eu3+ (or Tb3+), SrLa2BeO5:(4c):Eu3+ (or Tb3+), SrLa2BeO5:(8d):Eu3+ (or Tb3+), SrLaAlO4:Eu3+ (or Tb3+), SrLaGa3O7:Eu3+ (or Tb3+), SrLaO(BO3):Eu3+ (or Tb3+), SrO:Eu3+ (or Tb3+), SrY2O4:(Sr-site):Eu3+ (or Tb3+), SrY2O4:(Y-site1):Eu3+ (or Tb3+), SrY2O4:(Y-site2):Eu3+ (or Tb3+), Tb2Mo3O12:Eu3+ (or Tb3+), Tb2W3O12:Eu3+ (or Tb3+), TbBO3:Eu3+ (or Tb3+), ThO2:Eu3+ (or Tb3+), X1-Gd2SiO5:Eu3+ (or Tb3+), X1-Y2SiO5:Eu3+ (or Tb3+), X2-Y2SiO5:Eu3+ (or Tb3+), Y17.33(BO3)4(B2O5)2O16:Eu3+ (or Tb3+), Y2Ge2O7:Eu3+ (or Tb3+), Y2GeO5:Eu3+ (or Tb3+), Y2O2(SO4):Eu3+ (or Tb3+), Y2O2S:Eu3+ (or Tb3+), Y2O2S:Eu3+ (or Tb3+), Y2O3:Eu3+ (or Tb3+), Y2P4O13:Eu3+ (or Tb3+), Y2Si2O7:Eu3+ (or Tb3+), Y2SiO5:Eu3+ (or Tb3+), Y3AL5O12:Eu3+ (or Tb3+), Y3Ga5O12:Eu3+ (or Tb3+), Y3O4Br:Eu3+ (or Tb3+), Y3O4Cl:Eu3+ (or Tb3+), Y3PO7:Eu3+ (or Tb3+), Y4GeO8:Eu3+ (or Tb3+), Y8P2O17:Eu3+ (or Tb3+), YAl3(BO3)4:Eu3+ (or Tb3+), YAlO3:Eu3+ (or Tb3+), YAlO3:Eu3+ (or Tb3+), YBO3:Eu3+ (or Tb3+), YbOBr:Yb:Eu3+ (or Tb3+), YF3:Eu3+ (or Tb3+), YOBr:Eu3+ (or Tb3+), YOCl:Eu3+ (or Tb3+), YOCl:Eu3+ (or Tb3+), YOF:Eu3+ (or Tb3+), YOF:Eu3+ (or Tb3+), YP3O9:Eu3+ (or Tb3+), YPO4:Eu3+ (or Tb3+), YPO4:Eu3+ (or Tb3+), YTaO4:Eu3+ (or Tb3+), YVO4:Eu3+ (or Tb3+), ZrP2O7:Eu3+ (or Tb3+), or mixtures thereof.
The skilled person will understand that the notation Eu3+ (or Tb3+) indicates that the host lattice is doped with Eu3+ or with Tb3+.

In an exemplary embodiment, the second luminescent material is selected from the group consisting of (Srₙ,Ca₁₋ₙ)₁₀(PO₄)₆*B₂O₃:Eu²⁺ (wherein 0≦n≦1), (Ba,Sr,Ca)₅(PO₄)₃(Cl,F,Br,OH):Eu²⁺, (Ba,Sr,Ca)BPO₅:Eu²⁺, Sr₂Si₃O₈*2SrCl₂:Eu²⁺, (Ca,Sr,Ba)₃MgSi₂O₈:Eu²⁺, BaAl₈O₁₃:Eu²⁺, 2SrO*0.84P₂O₅*0.16B₂O₃:Eu²⁺, (Ba,Sr,Ca)MgAl₁₀O₁₇:Eu²⁺, (Ba,Sr,Ca)Al₂O₄:Eu²⁺, (Y,Gd,Lu,Sc,La)BO₃:Ce³⁺,Tb³⁺, (Ba,Sr,Ca)₂(Mg,Zn)Si₂O₇:Eu²⁺, (Mg,Ca,Sr,Ba,Zn)₂Si₁₋ₓO₄₋₂ₓ:Eu²⁺ (wherein 0≦x≦0.2), (Sr,Ca,Ba)(Al,Ga)₂S₄:Eu²⁺, (Ca,Sr)₈(Mg,Zn)(SiO₄)₄Cl₂:Eu²⁺, Na₂Gd₂B₂O₇:Ce³⁺,Tb³⁺, (Sr,Ca,Ba,Mg,Zn)₂P₂O₇:Eu²⁺, (Ca,Sr)S:Eu²⁺,Ce³⁺, (Y,Gd,Tb,La,Sm,Pr,Lu)₃(Sc,Al,Ga)₅₋ₙO_{12-3/2n}:Ce³⁺ (wherein 0≦n≦0.5), (Y,Lu,Th)₃Al₅O₁₂:Ce³⁺, (Ca, Sr) Ga₂S₄:Eu²⁺, SrY₂S₄:Eu²⁺, CaLa₂S₄:Ce³⁺, (Ba,Sr,Ca)MgP₂O₇:Eu²⁺, CaWO₄, (Ba,Sr,Ca)ₙSiₙNₙ:Eu²⁺ (where 2n+4=3n), Ca₃(SiO₄)Cl₂:Eu²⁺, (Y,Lu,Gd)₂₋ₙCaₙSi₄N₆₊ₙC₁₋ₙ:Ce³⁺, (wherein 0≦n≦0.5), (Lu,Ca,Li,Mg,Y) alpha-SiAlON doped with Eu²⁺ and/or Ce³⁺, (Ca,Sr,Ba)SiO₂N₂:Eu²⁺,Ce³⁺, (Sr,Ca)AlSiN₃:Eu²⁺, CaAlSi(ON)₃:Eu²⁺, Sr₁₀(PO₄)₆Cl₂:Eu²⁺, (BaSi)O₁₂N₂:Eu²⁺, SrSi₂(O,Cl)₂N₂:Eu²⁺, (Ba,Sr)Si₂(O,Cl)₂N₂:Eu²⁺ or mixtures thereof.

Preferably, the second luminescent material is excitable in the wavelength range between 380 to 580 nm. The second luminescent material may for instance be excitable in the UV-A (315 to 400 nm), violet (400 to 440 nm), blue (440 to 480 nm) or green (510 to 560 nm) wavelength range, preferably in the blue (440 to 480 nm) wavelength range. Preferably, the second luminescent material is doped with one or more ions selected from of the group consisting of Eu²⁺, Pb²⁺, Bi³⁺ and Ce³⁺, more preferably Ce³⁺ and Eu²⁺.

In a preferred embodiment, the second luminescent material is a Ce³⁺-doped garnet, such as Y₃Al₅O₁₂:Ce³⁺ ("YAG:Ce") or Lu₃Al₅O₁₂:Ce³⁺ ("LuAG:Ce") or a combination thereof.

Preferably, in the case of Ce³⁺ doping, the second luminescent material has a host lattice doped at a level of 0.05-5%, more preferably 0.1-4.

The mixture may comprise further luminescent materials. For instance, the mixture may comprise at least two emitting materials and/or at least two sensitizer materials. In a preferred embodiment, the mixture comprises first emitting material having a host lattice doped with Eu³⁺ ions; and a second emitting material having a host lattice doped with Tb³⁺ ions. The mixture may comprise a first sensitizer material and a second sensitizer material. The first sensitizer material and second sensitizer material may be so arranged to each other to allow energy transfer from the first sensitizer material to the first emitting material and/or from the second sensitizer material to the second emitting material.

It is possible to bring the first luminescent material (light emitting material) proximal to a large (e.g., several 10s, 100s, or 1000s nm) second luminescent material (sensitizer material). In this case, it may be beneficial to dope the donor sufficiently so that efficient non-radiative energy migration occurs between ions excited deep within the donor particle and those near the surface and which are thus likely to participate in FRET and give their energy to the neighboring first luminescent material. In the cases where high dopant concentrations lead to reduced quantum yields, for instance due to large size differences between the dopant atom in comparison to the target lattice site, co-doping with a second active ion can be used to enhance energy migration. It is important that FRET can occur between the first and second active ion within the same host lattice in order to have effective migration of the energy. In a preferred embodiment YAG:Ce³⁺, LuAG:Ce³⁺ or a combination of these two materials are doped with <5% Ce³⁺ and co-doped with up to several 10's of percent Tb³⁺. Energy migration might be beneficial for smaller particles as well, as well as helpful for the emitter particles.

### Second aspect of the invention

In a second aspect of the invention, there is provided a method of treating a luminescent material comprising organic ligands in accordance with claim 8, said method comprising:
(a) removing at least part of said organic ligands from the luminescent material; and
(b) after (a), annealing said luminescent material.

Said luminescent material comprising organic ligands is as described above. The luminescent material is provided in the form of nanoparticles.

### Third aspect of the invention.

The third aspect of the invention is directed to a method for preparing a luminescent composition in accordance with claim 9, said method comprising:
(i) providing a first luminescent material and a second luminescent material;
(ii) dispersing said first luminescent material and said second luminescent material in a liquid;
(iii) removing organic ligands from said first luminescent material and/or from said second luminescent material;
(iv) removing said liquid, resulting in a dried product, wherein said removing comprises evaporation; and
(v) annealing said dried product.

### Removal of organic ligands in the second and third aspects of the invention

The second aspect of the invention comprises removing at least part of said organic ligands. The third aspect of the invention comprises removing organic ligands from the first luminescent material and/or from the second luminescent material. Removal of organic ligands is advantageous, since it enables efficient annealing without or with limited oxidation of organic ligands.

Said removing at least part of said organic ligands is performed by the method of the first aspect of the invention.

### Dispersing the luminescent material in a liquid;

The method according to the second aspect of the invention comprises dispersing the luminescent material in a liquid. The method according to the third aspect of the invention comprises dispersing the first luminescent material and the second luminescent material in a liquid.

The liquid comprises water or an alcohol (e.g. methanol or ethanol) or a mixture thereof.

In an embodiment, the liquid may be the solution comprising the oxidizing agent or a washing liquid which may be used to wash first luminescent material and the second luminescent material after an organic ligand removal step.

### Removing said liquid, resulting in a dried product, wherein said removing comprises evaporation

The method according to the third aspect of the invention comprises removing the liquid, wherein the removing comprises evaporation. Generally, the method according to the second aspect of the invention comprises removing the liquid, wherein the removing comprises evaporation.

Removing the liquid by evaporation results in a dried product. Removing liquid by evaporation may be effected in any suitable manner, e.g. in an oven or under vacuum.

In the event the first luminescent material and second luminescent material are in the form of nanoparticles, the dried product is found to comprise clusters of nanoparticles.
In the dried product, the first luminescent material and second luminescent material are found to be in close proximity. In the embodiment wherein the first luminescent material and the second luminescent material are selected such that the second luminescent material has an emission spectrum which overlaps at least partly with one or more of excitation bands of the first luminescent material, such close proximity enables non-radiative energy transfer between them.

### Annealing

The methods according to the second, and third aspects of the invention comprise annealing. Annealing can be effected in any suitable manner. Preferably, annealing is effected at a temperature of at least 200 °C, preferably at least 500 °C, such as between 200 and 1500 °C or 500 and 1600 °C, preferably between 300 and 1200 °C, or between 500 and 1300 °C. Preferably, annealing is effected for a period of at least 30 seconds, preferably at least 1 minutes, more preferably from 1.5 minutes to 2 hours. Annealing may be effected for a period of at least 2 minutes, such as at least 5 minutes.

### Shell growth - avoiding migration

It has been found that doping ions, for instance Ce ions, may be present at the surface of the particles or nanoparticles and that the annealing process according to the invention may result in migration of doping ions present in or at the surface of the first luminescent material into the second luminescent material. Likewise, it is found that doping ions present in or at the surface of the second luminescent material may undesirably migrate into the first luminescent material, and vice versa. This may lead to intermixed active ions, i.e. a co-doped system, which may result in charge transfer quenching and lower luminescent efficiencies.

The inventors found how to avoid or at least mitigate this problem.

Preferably, (i) said first luminescent material is in the form of particles, preferably nanoparticles, wherein said first luminescent material comprises first doping ions, wherein said particles comprise a core surrounded by a shell, and wherein the concentration of said first doping ions in said shell is lower than the concentration of said first doping ions in said core; and/or (ii) said second luminescent material is in the form of particles, preferably nanoparticles, wherein said second luminescent material comprises second doping ions, wherein said particles comprise a core surrounded by a shell, and wherein the concentration of said second doping ions in said shell is lower than the concentration of said second doping ions in said core.

Preferably the methods according to the third and fourth aspects of the invention comprise (i) obtaining said first luminescent material by a method which comprises providing particles, preferably nanoparticles, doped with first doping ions, and growing a shell around said particles; and/or (ii) obtaining said second luminescent material by a method which comprises providing particles, preferably nanoparticles, doped with second doping ions, and growing a shell around said particles.

The shell of said particles of said first luminescent material may be free of said first doping ions and/or said shell of said particles of said second luminescent material may be free of said second doping ions. Preferably, the core and shell of the particles of the first luminescent material are comprised of the same host material and/or the core and the shell of the particles of the second luminescent material are comprised of the same host material.

By applying these preferred embodiments, surface ions doping ions that were initially sitting on the surface, may be surrounded by host material and no longer behave like (inactive or worse) surface ions. Furthermore, a non-doped shell around a doped core will act as diffusion buffer layer. When these nanocrystals are annealed at high temperature, ions can and will diffuse into this shell, but not into the other particles.

The shell thickness is preferably designed to be close to the diffusion length of ions at the annealing temperature and time, but not too thick as the sensitizer and emitter ions should be in close proximity to enable non-radiative inter-particle energy transfer. Therefore, preferred said shell of said particles of said first luminescent material has a thickness of between 2 and 10 nm, preferably between 3 and 5 nm and/or said shell of said particles of said second luminescent material has a thickness of between 2 and 10 nm, preferably between 3 and 5 nm.

In addition, the cores should preferably be as small as possible, to have a final core/shell particle size that still enables non-radiative inter-particle energy transfer. Therefore, preferably said core of said particles of said first luminescent material has a radius of less than 10 nm, preferably less than 5 nm; and/or said core of said particles of said second luminescent material has a radius of less than 10 nm, preferably less than 5 nm.

Furthermore, the core might have a very high doping concentration so that after annealing and diffusion, the complete particles have the final desired doping concentration.

It is also possible to grow a shell with doping ions that will not induce charge-transfer quenching with the emitter ions but which can act as migration ion. This would relax the requirements on the shell thickness, since a shell thicker than the diffusion length might still show energy transfer via the migration ion. E.g. having YAG:Ce,Tb as sensitizer, with an empty or Tb-doped shell mixed with YAG:Eu as emitter material.

Preferably, said first doping ions are selected from the group consisting of Eu³⁺, Tb³⁺, Mn⁴⁺, preferably Eu³⁺.

Preferably, said second doping ions are selected from the group consisting of Eu²⁺, Pb²⁺, Bi³⁺ and Ce³⁺, preferably Ce³⁺.

Preferably, said second luminescent material is Y₃Al₅O₁₂:Ce³⁺ ("YAG:Ce") or Lu₃Al₅O₁₂:Ce³⁺ ("LuAG:Ce") or a combination thereof.

### Procedure

Growing shells around nanoparticles is well known in the field of nanomaterials science. Seeded growth is an often used synthesis technique. Below, we give a concise background of the technique and theory behind it.

Seeded growth is a technique in which seeds (nanoscale materials, or porous bulk materials, or some hybrid of those two e.g. clustered nanocrystals) are added to a reaction mixture in which a material is grown. The surface of the seeds lowers the nucleation energy of the new material, promoting nucleation of the new material on the seeds. This is called heterogeneous nucleation. Heterogeneous nucleation will thus happen at lower temperatures and/or lower precursor concentrations than homogeneous nucleation, which allows to ultimately design a synthesis method that effectively suppresses homogeneous nucleation. The material that is grown on the seeds can be either the same material (homoepitaxial growth) or a different material (heteroepitaxial growth).

Different architectures are possible to obtain, e.g. core/shell geometries, segmented geometries, branched geometries, etc.

Different synthesis techniques can be employed in order to obtain the right balance between (heterogeneous) nucleation and growth:
- Seeded injection; in which the seeds are injected into a hot solution containing one (or more) of the precursors of the new material
- Heating up; in which the seeds are added to a mixture of the precursors of the new material and everything is heated (slow or fast) to a desired reaction temperature.
- Dropwise addition; the precursors of the new material are added dropwise to a hot solution containing the seeds.
- Alternate addition; alternate addition of small amounts of two precursors (usually alternating between cation and anion), the so-called SILAR method. This addition can either be fast or slow (dropwise).

In heterogeneous catalysis a (slightly) comparable impregnation technique is often used, in which a porous support material is impregnated with a solution of (metal) precursor material that nucleates and grows into nano- or micro-sized particles upon heating. Note however, that these particles consist of only one element.

Reference is made to: Donega, Chem. Soc. Rev., 2011, 40, 1512-1546*.*

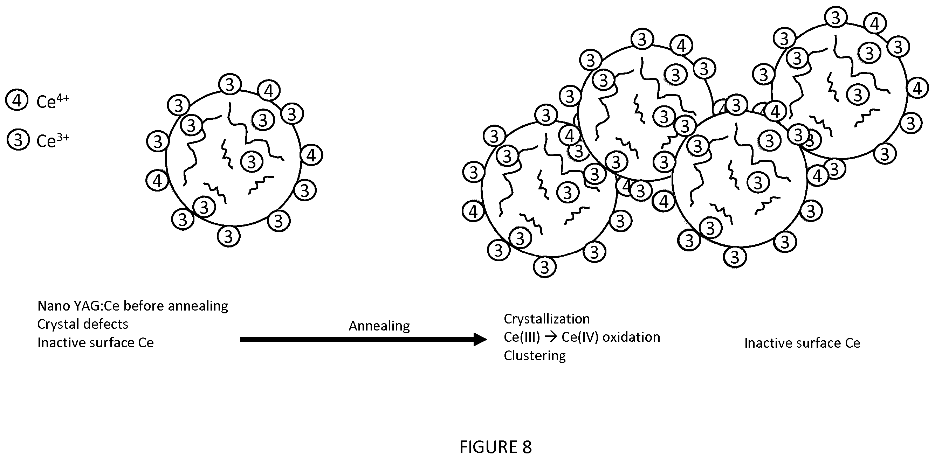

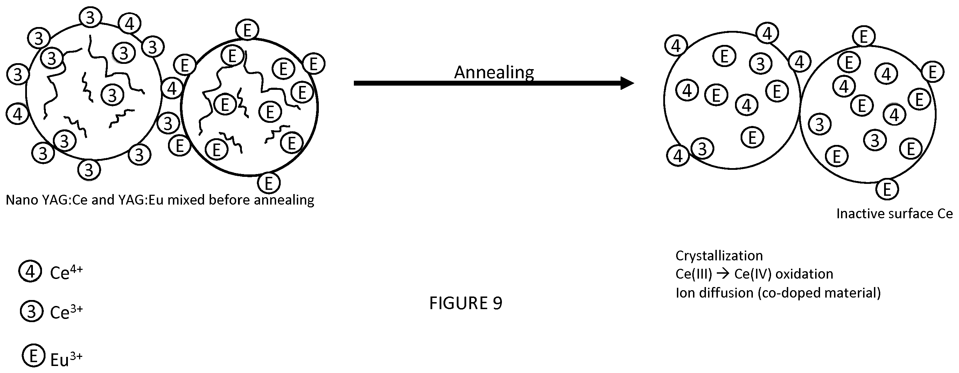

Figs. 8-12 may help visualize the shell growth idea. Fig. 8 shows that upon annealing YAG:Ce nanoparticles, some clustering occurs. In Fig. 9, the ions diffuse from one particle to the other upon annealing, resulting in crystalline particles, however having inactive surface Ce and inactive particles as there's no inter-particle transfer.

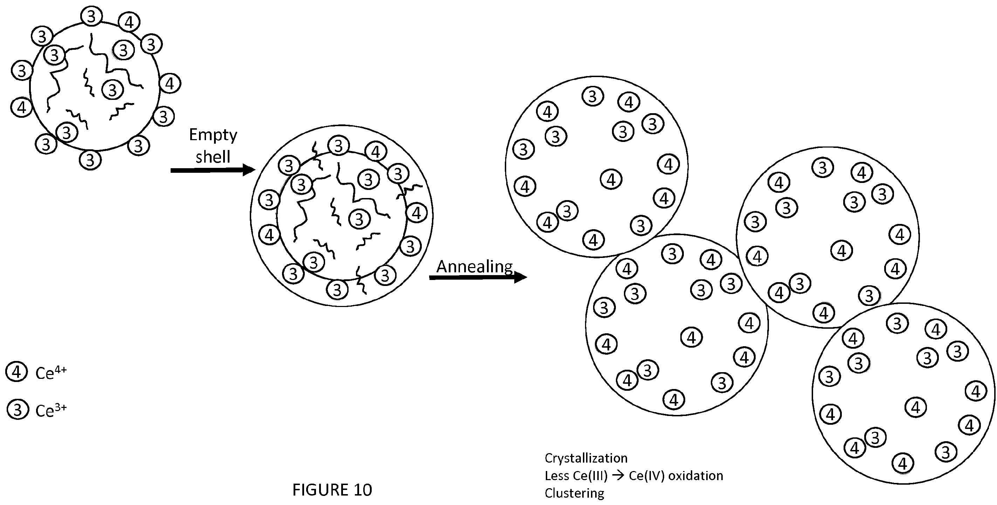

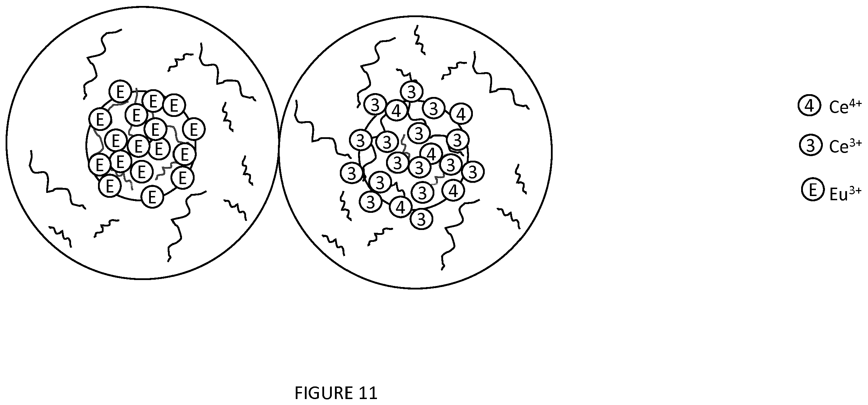

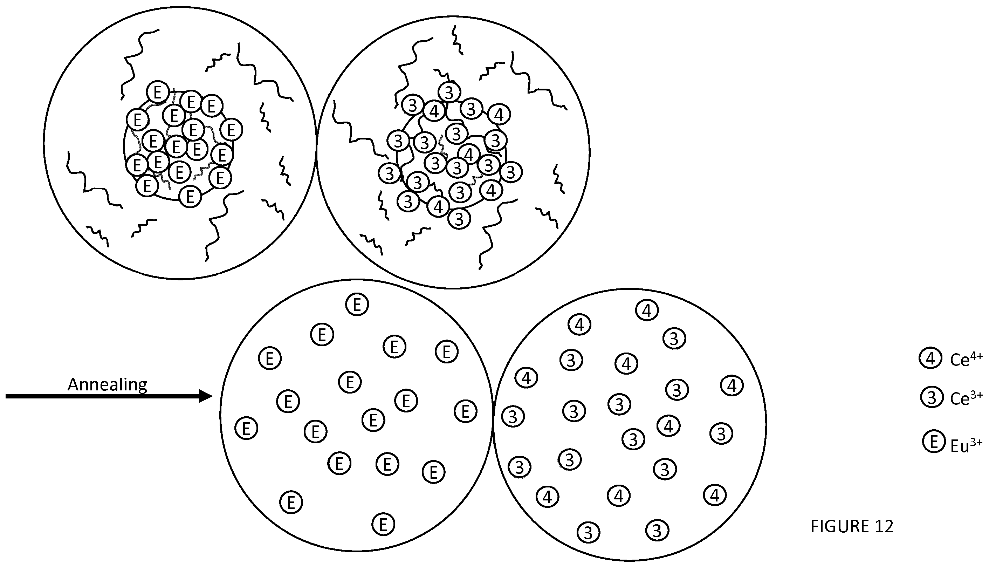

Fig. 10 visualizes how shells of YAG material are grown around YAG:Ce nanoparticles, which upon annealing leads to less surface Ce (thus, more active ions), and less Ce(III) oxidation to Ce(IV). This can thus solve the problems of inactive Ce at the surface of particles. Further, as Figs. 11 and 12 help visualize, growing empty shells around the nanoparticles having a greater thickness than the diffusion length, allows the YAG:Ce and YAG:Eu to be annealed in the presence of each other.

### First luminescent material and second luminescent material

The method according to the third aspect of the invention comprises providing a first luminescent material and a second luminescent material.

Preferred characteristics and features of the first luminescent material and second luminescent material are the same as discussed in the first aspect of the invention. The first luminescent material and/or the second luminescent material may or may not comprise organic ligands.

### Fourth aspect, not according to the invention

The method according to a fourth aspect, not according to the invention, comprises:
- providing a composition comprising a first luminescent material and a second luminescent material, wherein said first luminescent material and said second luminescent material are selected such that said second luminescent material has an emission spectrum which overlaps at least partly with one or more excitation bands of said first luminescent material; and wherein said first luminescent material and said second luminescent material are so arranged to each other to allow non-radiative energy transfer from said second luminescent material to said first luminescent material; and
- annealing said composition.

Surprisingly it is found that annealing of the composition enables to obtain a composition capable of providing increased non-radiative energy transfer.

The skilled person will understand that non-radiative energy transfer (sometimes also referred to as Fluorescent Resonance Energy Tranfer, FRET) from the second luminescent material (or sensitizer material) to the first luminescent material (or light emitting material) involves the non-radiative transfer of energy from an excited sensitizer ion in the second luminescent material to an acceptor (or emitter) ion in the first luminescent material. It is evidenced and detectable by increased selective excitation of the sensitizer ion in the second luminescent material, resulting in increased emission from an emitter ion in the first luminescent material.

Detectable non-radiative energy transfer may be achieved in any suitable manner.

The skilled person will realize that - since resonant energy transfer is in first order inversely proportional to inter-ion distance at the power of 6 - the arrangement to allow non-radiative energy transfer may be effected by proper engineering of the effective distances between the sensitizer ions in the sensitizer material and the emitter ions in the emitting material. It may for instance be achieved by the methods disclosed herein and/or by the topologies disclosed herein.

The composition comprising the first luminescent material and second luminescent material to be used in the method according to the fourth aspect, not according to the invention, may for instance obtained or obtainable by applying the method according to steps (i), (ii), (iii) and (iv) of the third aspect of the invention. As discussed, this method enables to obtain the first luminescent material and second luminescent material in close enough proximity to allow non-radiative energy transfer between them.

The first luminescent material and the second luminescent material used in the fourth aspect, not according to the invention, preferably have the characteristics as described in the discussion of the first aspect of the invention.

The luminescent composition may comprise further luminescent materials. For instance, the luminescent composition may comprise at least two emitting materials and/or at least two sensitizer materials. In a preferred embodiment, the luminescent material comprises a first emitting material having a host lattice doped with Eu3+ ions; and a second emitting material having a host lattice doped with Tb3+ ions. The luminescent composition may comprise a first sensitizer material and a second sensitizer material. The first sensitizer material and second sensitizer material may be so arranged to each other to allow non-radiative energy transfer from the first sensitizer material to the first emitting material and/or from the second sensitizer material to the second emitting material.

The composition used in the method according to the fourth aspect may be obtained in many different ways and may have a wide variety of forms.

According to a preferred embodiment of the fourth aspect, not according to the invention, the first luminescent material and/or second luminescent material is provided as a nanophosphor. According to the present invention, the term "nanophosphor" in the context of the present invention especially means and/or includes a topology in which at least one dimension thereof is in a nanometer scale, preferably ≤100nm or less. It should be noted that the first material together with the second material may comprise much larger structures.

Methods of producing such nanophosphors are inter alia described in Development of nanophosphors-A review, H. Chander, Materials Science and Engineering, 49, 113-155 (2005*).*

The composition may be in the form of nanoparticles as discussed hereinabove.

According to a preferred embodiment of the fourth aspect, not according to the invention the nanoparticles have a core-shell structure with undoped material forming the core and the first luminescent material forming a shell around the core. Advantages include to be able to lower the amount of the Eu³⁺ used and to increase overall energy transfer efficiency. If this embodiment is used, it is especially preferred that the thickness of the shell essentially made out of the first luminescent material is ≥ 0.5 nm and ≤5 nm.

According to another preferred embodiment of the fourth aspect, not according to the invention, the first luminescent material is provided, preferably essentially provided as a nanolayer, i.e. a layer in which the thickness of the layer is in a nanometer scale, preferably ≤100nm or less, preferably ≥ 0.5nm and ≤10 nm, whereas the width and breadth may be larger.

According to another preferred embodiment of the fourth aspect, not according to the invention, the second luminescent material is provided, preferably essentially provided as a nanophosphor (or nanoparticles), whereby *mutatis mutandis* and independently from the first material the above description can be applied here, too.

According to a further preferred embodiment of the fourth aspect, not according to the invention, the second luminescent material is provided, preferably essentially provided as a bulk material with the first material provided on the second luminescent material. In this context the term "bulk" especially means and/or includes greater than nano-scale, for example > 100 nm diameter and including micro-size scales.

According to a further embodiment of the fourth aspect, not according to the invention, the first luminescent material and/or second luminescent material is provided, preferably essentially provided as a ceramic. The term "ceramic" according to the present description refers to and/or encompasses in particular a compact crystalline or polycrystalline material which includes a controlled amount of pores or is non-porous. The term "polycrystalline material" according to the present description refers to and/or encompasses in particular a material having a bulk density of greater than 90 percent of the main component, consisting of more than 80 percent of individual crystal domains, wherein each crystal domain has a diameter of 0.1 - 10 µm and a different crystallographic orientation. The individual crystal domains may be bonded to each other or diluted via an amorphous or glassy material or by additional crystalline phases. According to a preferred embodiment of the present disclosure the crystalline material has a density of ≥ 90% to ≤ 100% of the theoretical density. This has been found to be advantageous for many applications of the present disclosure.

According to a preferred embodiment of the fourth aspect, not according to the invention, the first luminescent material and second luminescent material are provided, preferably essentially provided as several shells in a nanophosphor and/or nanoparticle material. In this regard several topologies are preferred within the present disclosure:

### Core- shell- topologies

According to one embodiment, the first luminescent material forms the core whereas the second luminescent material is provided as a shell, according to an alternative the first luminescent material forms the shell whereas the second luminescent material forms the core. For both embodiments it is advantageous that both the core as well as the shell independently have a thickness of ≥ 1nm and ≤20 nm.

### Several shells

The above topology can be expanded to have a structure with several shells. Here the following structures have proven themselves to be especially of interest:
- First luminescent material as the core, second luminescent material around the core and a second layer of first luminescent material around the second luminescent material
- Second luminescent material as the core, first luminescent material around the core and a second layer of second luminescent material around the first luminescent material
- Undoped material as the core, second luminescent material around the core and a second layer of first luminescent material around the sensitizer material (or vice-a-versa)
- Four layer structures e.g. with an undoped core, then subsequently layers of first luminescent material, second luminescent material and first material around the core or with an undoped core, then subsequently layers of second luminescent material, first luminescent material and second luminescent material around the core
For all these topologies it is preferred that independently from each other the thickness of each shell and/or the core is ≥ 0.5nm and ≤20 nm.

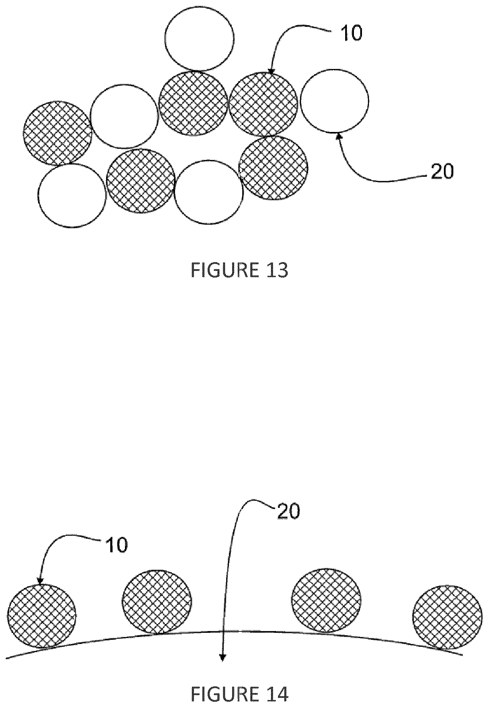

Figure 13 shows - very schematically - a first embodiment of the composition which may be used in the fourth aspect, not according to the present invention, in with both the first luminescent material 10 and the second luminescent material 20 are provided in the form of nanoparticles. As can be seen from Figure 13 the surface-to-surface distance between the particles is small enough to allow for direct non-radiative energy transfer from the second luminescent material 20 to the first luminescent material 10. However, the undesired charge-transfer quenching usually does not or only seldom occur because here the distance between the second luminescent material and the Eu³⁺ of the first luminescent material is usually too large.

Figure 14 shows -very schematically - a second embodiment of the composition which may be used in the fourth aspect, not according to the present invention. In this embodiment, the second luminescent material 20 is provided as a bulk material with the first luminescent material 10 provided as nanoparticles surrounding the second luminescent material. This approach has been shown to be especially promising if the emission of the sensitizer is also desired in the spectrum of the device, e.g., if the sensitizer material comprises YAG:Ce or the like.

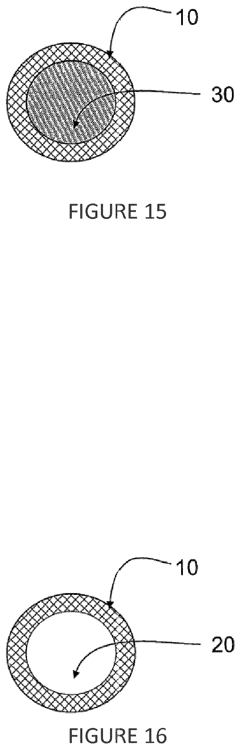

Figures 15 to 18 show very schematical cross-sectional views through nanoparticles according to the fifth to eight embodiments, not according to the present invention.

In Figure 15 the nanoparticle has a core formed out of an undoped material 30 with the first luminescent material 10 forming a shell around it.

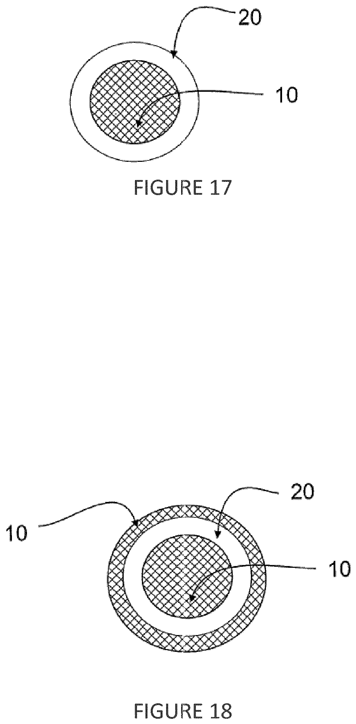

In Figure 16 the second luminescent material 20 forms the core with the first luminescent material 10 provided as a shell around the core, in Fig. 17 it is the other way around i.e. the first luminescent material 10 forms the core, the second luminescent material 20 the shell.

The embodiment of Figure 18 shows a more complex structure with the first luminescent material 10 forming another shell around the particle of the embodiment of Fig. 17.

It is possible to bring the first luminescent material (light emitting material) proximal to a large (e.g., several 10s, 100s, or 1000s nm) second luminescent material (sensitizer material). In this case, it may be beneficial to dope the donor sufficiently so that efficient non-radiative energy migration occurs between ions excited deep within the donor particle and those near the surface and which are thus likely to participate in FRET and give their energy to the neighboring Tb³⁺ and/or Eu³⁺ doped nanoparticles. In the case of YAG:Ce, wherein high (> 3%) Ce³⁺ concentrations can lead to reduced quantum efficiencies due to the large Ce atom in comparison to the target lattice site, co-doping with Tb³⁺ (up to several 10's of percent) can be used to enhance energy migration. Energy migration might be beneficial for smaller particles as well, as well as helpful for the emitter particles.

Annealing of the composition can be effected in any suitable manner. Preferably, annealing is effected at a temperature of at least 200 °C, such as between 200 and 1500 °C, preferably between 300 and 1200 °C. Preferably, annealing is effected for a period of at least 5 minutes, more preferably from 15 minutes to 12 hours.

### Luminescent material, light-emitting device and lighting system

The invention further relates to a luminescent material obtainable by any of the methods according to the invention.

In a preferred embodiment wherein the first luminescent material and the second luminescent material are selected such that the second luminescent material has an emission spectrum which overlaps at least partly with one or more of excitation bands of the first luminescent material, a luminescent material obtainable by the invention allows detectable energy transfer (FRET) from the second luminescent material (or sensitizer material) to the first luminescent material (light emitting material).

The skilled person will understand that non-radiative energy transfer (sometimes also referred to as Fluorescent Resonance Energy Tranfer, FRET) from the second luminescent material (or sensitizer material) to the first luminescent material (or light emitting material) involves the non-radiative energy transfer of energy from an excited sensitizer ion in the second luminescent material to an acceptor (or emitter) ion in the first luminescent material. It is evidenced and detectable by increased selective excitation of the sensitizer ion in the second luminescent material, resulting in increased emission from an emitter ion in the first luminescent material.

The invention further relates to a light-emitting device comprising the luminescent material obtainable by the method according to the invention. Preferably the light-emitting device further comprises an excitation source for the luminescent material, such as for the second luminescent material. Preferably the excitation sources is a UV-A, violet or blue light emitting material which emits light towards the luminescent material with a wavelength of 315-400 nm (UV-A), 400-440 nm (violet) or 440-480 nm (blue), more preferably between 430-465 nm.

The invention further relates to a lighting system comprising a light emitting device according to the invention. Preferably, the lighting system is selected from the group consisting of a lamp or luminaire, office lighting systems, household application systems shop lighting systems, home lighting systems, accent lighting systems, spot lighting systems, theater lighting systems, fiber-optics application systems, projection systems, self-lit display systems, pixelated display systems, segmented display systems, warning sign systems, medical lighting application systems, indicator sign systems, and decorative lighting systems, portable systems, automotive applications and green house lighting systems.

The invention will now further be illustrated using the following examples, without however being limited thereto.

### EXAMPLES

### Example 1: Exemplary Procedure

The following exemplary procedure is provided:
- Nanomaterials are mixed together in the desired weight ratios. This could be either in dried (powder) form, or dispersed in a liquid.
- A solvent is added; typically 5-20 mL of either water, methanol or ethanol is added to 100-200 mg of nanomaterials.
- Mixture is shaken and stirred for a few minutes
- Mixture is sonicated for 1.5 hrs
- Base piranha solution is prepared in the meantime: concentrated NH4OH solution (30% in water) is heated to 60C, the H₂O₂ (30% in water) is added in a ~3:1 ratio and reheated to 60C.
- About 15mL of the base piranha solution is added to the nanopowder dispersion/solution and heated to 60-80C and stirred for 90 min.
- After 30 min. solution/dispersion was cooled to room temperature and centrifuged at 3000 rpm for 10 min
- Piranha solution was removed after centrifuging, and 5 mL of acidic ethanol was added to wash (pH 4, prepared by adding 0.1M HCl to ethanol). Mixture was shaken and sonicated for a few minutes to disperse the materials again.
- Centrifuged again (3000 rpm, 10 min), removed supernatant and re-mixed in acidic ethanol.
- In total particles were washed 5 times with acidic ethanol before adding few mL water
- Particles were dried in the oven at 120-180 C.
- Sample was grinded into a powder

### Example 2: Ligand removal from LaPO4:Eu³⁺ (10%) + LaPO4:Tb³⁺ (40%) nanoparticles

LaPO₄:Eu³⁺ (5%) + LaPO4:Tb³⁺ (40%) nanoparticles with tributylamine ligands were synthesized using the following (known in literature) procedure:
A typical recipe for the preparation of La₁₋ₓLnₓPO₄ nanoparticles in a high boiling coordinating solvent is as follows:
- Dissolve a total of 10 mmol LaCl₃.6H₂O and EuCl₃.6H₂O or TbCl₃.6H₂O, with a ratio depending on the desired doping level, in approximately 10 mL of methanol p.a. in a 100 mL 3-neck round-bottomed flask and acquire a clear solution
- Add 10.9 mL, 10.650 g (40 mmol) tributyl phosphate
- Remove methanol from solution under vacuum (Schlenk-line), careful with vacuum
- Add 30 mL (32 g) diphenyl ether
- Open system, flush afterwards
- Remove the water released by the hydrated metal chlorides under vacuum at 105°C (Schlenk line) - water should evaporate around 80-85°C
- Cool down reaction mixture to below 50°C and add 9.5 mL, 7.41 g (40 mmol) tributylamine to the clear solution (under nitrogen)
- Add 7.0 mL of a 2 M solution phosphoric acid in dihexyl ether (dissolve 1.96 g H₃PO₄ in 10 mL dihexyl ether under ultrasonification), large vial
- Heat the mixture to 200°C for 16 hours and cool reaction mixture to room temperature
- Separate nanocrystals by centrifuging at 2000 rpm for 5 minutes
- Wash nanocrystals several times with toluene, careful with adding methanol
- Dry powder under vacuum
- The powder should be redispersible in methanol
- Perform S-ray Diffraction (XRD) measurements to determine whether the La₁₋ₓPO4:Lnₓ is obtained

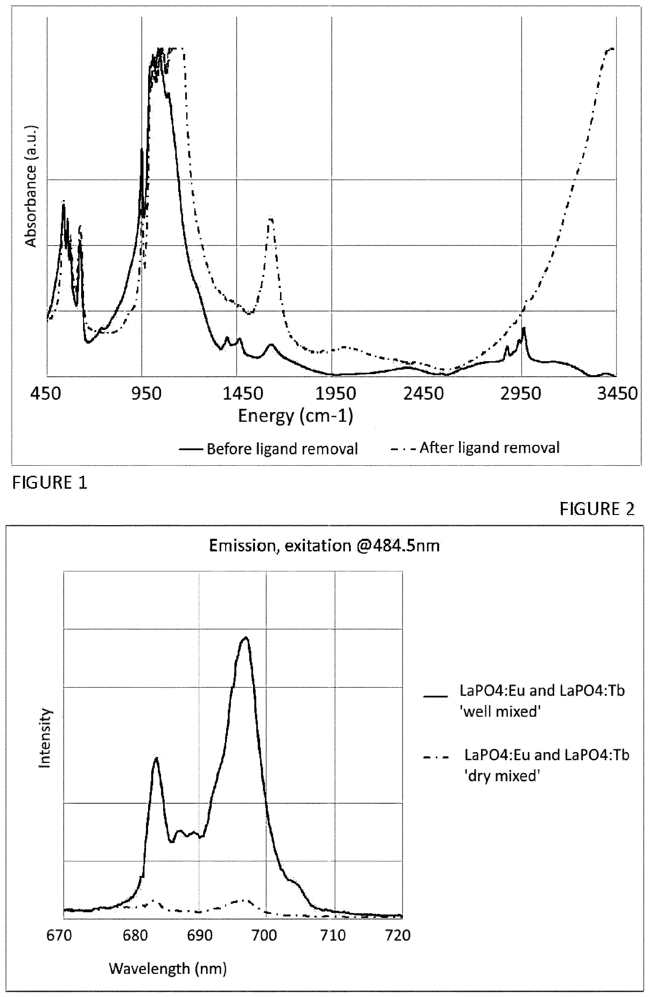

The procedure described in example 1 was followed. The nanoparticles were mixed in a 1:1 weight ratio.
FTIR spectra of the LaPO₄ particles before and after ligand removal were measured. The results have been indicated in Figure 1. In this figure peaks around 1450 and 2950 cm⁻¹ indicate C-H bending and stretching from the ligands respectively, which are clearly present in the case of the sample measured before ligand removal. After the ligand removal treatment these peaks are no longer present, indicating that ligands have been successfully removed.

### Example 3: Evidence for energy transfer

In this example the following experiments are performed to show the occurrence of energy transfer in the LaPO₄ particles obtained in example 2.

To this end the behavior of the LaPO₄ particles obtained in example 2 is compared to that of LaPO₄:Eu (10%) + LaPO₄:Tb (40%) nanoparticles (also in a 1:1 weight ratio) which do not exhibit energy transfer, as the LaPO₄:Eu (10%) nanoparticles and LaPO₄:Tb (40%) nanoparticles are processed separately by the following "dry mixing" process
- Nanomaterials of interest are weighted in the desired weight ratios, but both put into a different vial (not mixed together). This could be either in dried (powder) form, or dissolved/dispersed in a liquid.
- A solvent is added in both vials; typically 5-20 mL of either water, methanol or ethanol is added to 100-200 mg of nanomaterials.
- Dispersions are shaken and stirred for a few minutes
- Dispersions are sonicated for 1.5 hrs
- Base piranha solution is prepared in the meantime: concentrated NH4OH solution (30% in water) is heated to 60C, the H₂O₂ (30% in water) is added in a ~3:1 ratio and reheated to 60C.
- About 15mL of the base piranha solution is added to the nanopowder dispersions/solutions and heated to 60-80C and stirred for 90 min.
- After 30 min. solutions/dispersions were cooled to room temperature and centrifuged at 3000 rpm for 10 min
- Piranha solution was removed after centrifuging, and 5 mL of acidic ethanol was added to wash (pH 4, prepared by adding 0.1M HCl to ethanol). Samples were shaken and sonicated for a few minutes to disperse the materials again.
- Centrifuged again (3000 rpm, 10 min), removed supernatant and re-mixed in acidic ethanol.
- In total particles were washed 5 times with acidic ethanol before adding few mL water
- Particles were dried in the oven at 120-180C.
- Materials were grinded into a powder.
- Materials were put together and mixed by shaking the bottle

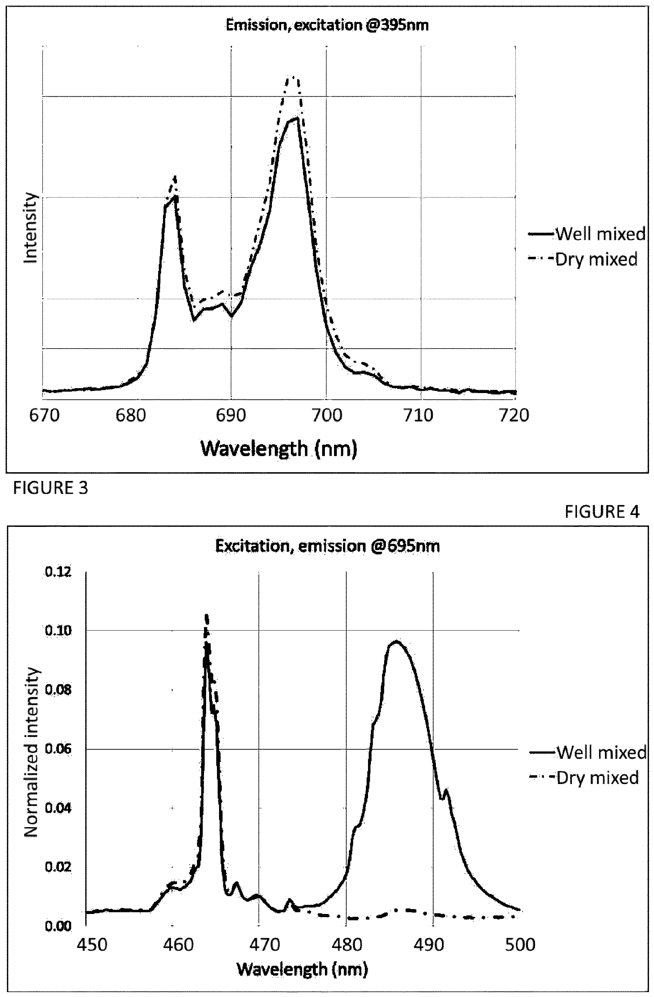

Then, the following measurements were performed on both samples (i.e. the sample obtained in example 2 and the sample obtained by the dry mixing)
- Samples were excited at 484.5 nm, were only Tb is excitable. Figure 2 shows the emission intensity from 670-720 nm, were only Eu3+ emits light. Clearly, the sample obtained in example 2 shows much more emission in this region, indicating energy transfer from Tb → Eu.
- Samples were excited at 395 nm, were only Eu3+ is excitable and no IFRET processes can take place. Figure 3 shows that both the sample according to example 2 and 'dry mixed' samples show very similar (Eu3+) emission intensities, indicating that in both mixtures the Eu3+ has very similar activity.
- Excitation spectrum was recorded of the Eu3+ emission at 695 nm, shown in Fig. 4. Only for the sample obtained in example 2 the Tb excitation lines are clearly visible, indicating IFRET mechanisms.

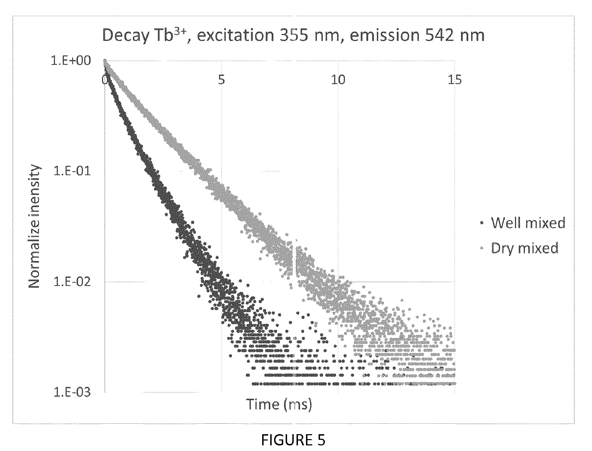

- Figure 5 shows the decay of both samples, which is clearly accelerated in case of the sample obtained in example 2, which is a typical signature of non-radiative energy transfer processes.

### Example 4

Four different methods were used to treat the nanoparticles:
1. HCl treatment (as in Wang et al, Tuning upconversion through Energy Migration in Core-Shell Nanoparticles, Supplementary Information, Nature Materials (2011) 1-35). This method did not work in our case (see Table 1), and strong acids can damage or even dissolve the nanoparticles.
2. (NH4)2S treatment, which is an example of a more selective method: This procedure is based on Nano Lett., 2011, 11 (12), pp 5356-5361, where they show ligand removal of InP and CdSe quantum dots, while maintaining quantum confinement. They also show that the particles touch after ligand removal and do not touch before ligand removal. The principle is that S binds to the metal of the nanoparticle host lattice, while (NH4) binds to the oleic acid ligand, thereby decoupling the nanoparticles from the ligands. This method works for some nanoparticle-ligand couples, but is much more selective than treatment by an oxidizing agent (see Table 1)
   - 0.004 M (NH4)2S solution was prepared by adding 0.03 mL 50 w% (NH4)2S solution in water to 50 mL methanol.
   - 10 mL of this solution was added to ~200g nanoparticles, and stirred for 15 minutes
   - Acetone was added to sediment the particles, and the mixture was centrifuged (10 min. @3000 rpm)
   - Supernatant was removed, and acidic ethanol was added (pH 4, prepared by adding 0.1M HCl to ethanol). Mixture was shaked and sonicated for 40 min.
   - Particles were washed 4 times with acidic ethanol before adding few mL water.
   - The LaPO4:Ce particles were washed again 4 times with water. The YVPO4:Eu didn't come out of solution after adding water, so no further washing was done.
   - Particles were dried in the oven at 180-200C.
   In our case we found successful ligand removal in some, but not all cases for this method.
3. Thermal treatment: a few hours at 1100C in air
4. Base piranha treatment as described above.

After treatment the samples were measured using FTIR, or put in the oven at 300C (in air) for 2 hours. In case organic ligands are present, they will turn black which is clearly visible by eye. If organic ligands have successfully been removed, the material will not change color or become a lighter color.

**Table 1**

| **Material** | **Ligand** | **Method** | **Ligands removed?** |
|---|---|---|---|
| LaPO4:Ce (~4 nm diameter) | tributylamine | (NH4)2S treatment (literature) | Yes |
| LaPO4:Ce (~4 nm diameter) | tributylamine | Base piranha treatment | Yes |
| LaPO4:Ce (~4 nm diameter) | Tributylamine | Thermal treatment (1100C) | Yes, but Ce⁴⁺ formation |
| YVPO4:Eu (~7 nm diameter) | Ethylene glycol | (NH4)2S treatment (literature) | No |
| YVPO4:Eu (~7 nm diameter) | Ethylene glycol | Base piranha treatment | Yes |
| YVPO4:Eu (~7 nm diameter) | Ethylene glycol | Thermal treatment (1100C) | Yes |
| Y3Al5O12:Ce (~7 nm diameter) | Ethylene glycol | Base piranha | Yes |
| NaYF4:Eu (~20 nm diameter) | Oleate | HCl treatment | No |
| NaYF4:Eu (~20 nm diameter) | Oleate | (NH4)2S treatment (literature) | Yes |
| NaYF4:Eu (~20 nm diameter) | Oleate | Base piranha treatment | Yes |

### Example 5: Exemplary Procedure

The following exemplary procedure is provided:
- Nanomaterials are mixed together in the desired weight ratios. This could be either in dried (powder) form, or dissolved/dispersed in a liquid.
- A solvent is added; typically 5-20 mL of either water, methanol or ethanol is added to 100-200 mg of nanomaterials.
- Mixture is shaken and stirred for a few minutes
- Mixture is sonicated for 1.5 hrs
- Base piranha solution is prepared in the meantime: concentrated NH₄OH solution (30% in water) is heated to 60C, the H₂O₂ (30% in water) is added in a ~3:1 ratio and reheated to 60C.
- About 15mL of the base piranha solution is added to the nanopowder dispersion/solution and heated to 60-80 C and stirred for 90 min.
- After 30 min. solution/dispersion was cooled to room temperature and centrifuged at 3000 rpm for 10 min
- Piranha solution was removed after centrifuging, and 5 mL of acidic ethanol was added to wash (pH 4, prepared by adding 0.1M HCl to ethanol). Mixture was shaken and sonicated for a few minutes to disperse the materials again.
- Centrifuged again (3000 rpm, 10 min), removed supernatant and re-mixed in acidic ethanol.
- In total particles were washed 5 times with acidic ethanol before adding few mL water
- Particles were dried in the oven at 120-180C.
- Sample was grinded into a powder

### Example 6 (with annealing) and Example 7 (without annealing)

LaPO₄:Eu³⁺ (5%) + **LaPO4:Tb³⁺** (40%) nanoparticles with tributylamine ligands were synthesized using the following (known in literature) procedure:
A typical recipe for the preparation of La₁₋ₓLnₓPO₄ nanoparticles in a high boiling coordinating solvent is as follows:
- Dissolve a total of 10 mmol LaCl₃.6H₂O and EuCl₃.6H₂O or TbCl₃.6H₂O, with a ratio depending on the desired doping level, in approximately 10 mL of methanol p.a. in a 100 mL 3-neck round-bottomed flask and acquire a clear solution
- Add 10.9 mL, 10.650 g (40 mmol) tributyl phosphate
- Remove methanol from solution under vacuum (Schlenk-line), careful with vacuum
- Add 30 mL (32 g) diphenyl ether
- Open system, flush afterwards
- Remove the water released by the hydrated metal chlorides under vacuum at 105°C (Schlenk line) - water should evaporate around 80-85°C
- Cool down reaction mixture to below 50°C and add 9.5 mL, 7.41 g (40 mmol) tributylamine to the clear solution (under nitrogen)
- Add 7.0 mL of a 2 M solution phosphoric acid in dihexyl ether (dissolve 1.96 g H₃PO₄ in 10 mL dihexyl ether under ultrasonification), large vial
- Heat the mixture to 200°C for 16 hours and cool reaction mixture to room temperature
- Separate nanocrystals by centrifuging at 2000 rpm for 5 minutes
- Wash nanocrystals several times with toluene, careful with adding methanol
- Dry powder under vacuum
- The powder should be redispersible in methanol
- Perform S-ray Diffraction (XRD) measurements to determine whether the La₁₋ₓPO4:Lnₓ is obtained

The procedure described in example 1 was followed. The nanoparticles were mixed in a 1:1 weight ratio.

In example 2 the sample (grinded powder) was annealed at 600 °C for 2 hrs before measuring the spectra.

In example 3 the sample (grinded powder) this annealing step was not applied.

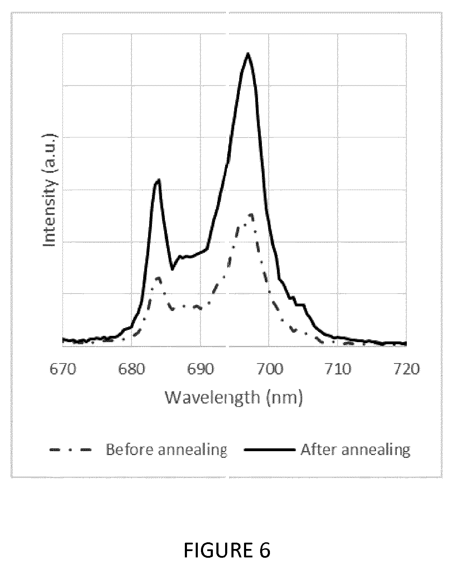

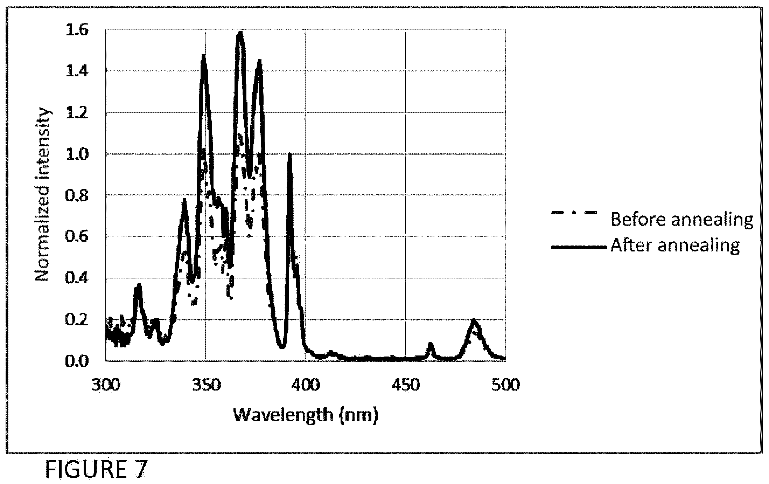

Both samples are excited in the Tb³⁺ at 484.5 nm, with the same intensity and measured at room temperature. The sample "After annealing" (example 2) clearly shows a factor more than 2 stronger Eu³⁺ emission compared to the sample "Before annealing" (example 3), see Figure 6. Surprisingly, the sample does not only show a higher overall emission intensity, but also a high IFRET efficiency as can be seen from Figure 7. In Figure 7 the excitation spectrum of Eu³⁺ is measured at 697 nm, where the Tb excitation lines are clearly relatively more intense after annealing compared to before. This indicates a higher IFRET efficiency.

## Claims

1. **Method** for treating a luminescent material comprising organic ligands, said method comprising
contacting said luminescent material comprising organic ligands with an oxidizing agent,
wherein said luminescent material comprising organic ligands is a mixture comprising at least a first luminescent material and a second luminescent material, and wherein the first luminescent material and/or second luminescent material comprise organic ligands, and wherein said luminescent material is in the form of nanoparticles and comprises a host lattice which is doped with ions, and
wherein said contacting is carried out in the presence of a solution comprising the oxidizing agent, wherein said solution comprises water or an alcohol or a mixture thereof.

2. Method according to claim 1, wherein the D₅₀ value of the nanoparticles is ≥ 1nm and ≤ 100 nm.

3. Method according to any preceding claim, wherein said oxidizing agent has a standard reduction potential of > 1 Volt, and/or wherein the oxidizing agent comprises H₂O₂.

4. Method according to any preceding claim, further comprising separating said luminescent material from the oxidizing agent.

5. Method according to any preceding claim, wherein said solution comprises NH₄OH.

6. Method according to any preceding claim, further comprising recovering said luminescent material from said solution, preferably wherein said recovering said luminescent material from the solution comprises gravity separation (preferably centrifugation) and/or drying by evaporation, and/or wherein said recovering said luminescent material from the solution comprises washing said luminescent material using a washing liquid and recovering said luminescent material from said washing liquid, preferably wherein said recovering said luminescent material from said washing liquid comprises gravity separation (preferably by centrifugation) and/or drying by evaporation.

7. Method according to claim 1, wherein the first luminescent material and the second luminescent material comprise organic ligands.

8. Method for treating a luminescent material comprising organic ligands, said method comprising:
(a) removing at least part of said organic ligands from the luminescent material according to the method of any of claims 1-7; and
(b) after (a), annealing said luminescent material.

9. Method for preparing a luminescent composition, said method comprising:
(i) providing a first luminescent material and a second luminescent material;
(ii) dispersing said first luminescent material and said second luminescent material in a liquid, wherein said liquid comprises water or an alcohol or a mixture thereof;
(iii) removing organic ligands from said first luminescent material and/or from said second luminescent material by contacting said luminescent material comprising organic ligands with an oxidizing agent, wherein said luminescent material is in the form of nanoparticles and comprises a host lattice which is doped with ions, and wherein said contacting is carried out in the presence of a solution comprising the oxidizing agent, wherein said solution comprises water or an alcohol or a mixture thereof;
(iv) removing said liquid, resulting in a dried product, wherein said removing comprises evaporation; and
(v) annealing said dried product.

10. Method according to any one of claims 1-7 or 9, wherein said first luminescent material and said second luminescent material are selected such that said second luminescent material has an emission spectrum which overlaps at least partly with one or more of excitation bands of the first luminescent material.

11. Method according to any one of claims 1-7 or 9-10, wherein said first luminescent material is a red emitting material, preferably wherein said first luminescent material is doped with one or more ions selected from the group consisting of Eu³⁺, Tb³⁺, Mn⁴⁺.

12. Method according to any one of claims 1-7 or 9-11, wherein said second luminescent material is excitable in the wavelength range between 380 to 580 nm, preferably wherein said second luminescent material is excitable in the UV-A (315 to 400 nm), violet (400 to 440 nm), blue (440 to 480 nm) or green (510 to 560 nm) wavelength range, preferably in the blue (440 to 480 nm) wavelength range, preferably wherein said second luminescent material is doped with one or more ions selected from of the group consisting of Eu²⁺, Pb²⁺, Bi³⁺ and Ce³⁺, more preferably wherein said second luminescent material is Y₃Al₅O₁₂:Ce³⁺ ("YAG:Ce") or Lu₃Al₅O₁₂:Ce³⁺ ("LuAG:Ce") or a combination thereof.

13. Method according to any of claims 8-12, wherein said annealing is effected at a temperature of between 200 and 1500 °C.

14. Method according to any one of claims 1-7 or 9-13, wherein
(i) said first luminescent material is in the form of particles, preferably nanoparticles, wherein said first luminescent material comprises first doping ions, wherein said particles comprise a core surrounded by a shell, and wherein the concentration of said first doping ions in said shell is lower than the concentration of said first doping ions in said core; and/or
(ii) said second luminescent material is in the form of particles, preferably nanoparticles, wherein said second luminescent material comprises second doping ions, wherein said particles comprise a core surrounded by a shell, and wherein the concentration of said second doping ions in said shell is lower than the concentration of said second doping ions in said core.

15. Method according to any one of claims 7 or 9-14, further comprising
(i) obtaining said first luminescent material by a method which comprises providing particles, preferably nanoparticles, doped with first doping ions, and growing a shell around said particles; and/or
(ii) obtaining said second luminescent material by a method which comprises providing particles, preferably nanoparticles, doped with second doping ions, and growing a shell around said particles.

16. Method according to claim 14 or 15, wherein said shell of said particles of said first luminescent material is free of said first doping ions and/or wherein said shell of said particles of said second luminescent material is free of said second doping ions.

17. Method according to any one of claims 14-16, wherein
- said shell of said particles of said first luminescent material has a thickness of between 2 and 6 nm, preferably between 3 and 5 nm and/or wherein said shell of said particles of said second luminescent material has a thickness of between 2 and 6 nm, preferably between 3 and 5 nm, and/or
- said core of said particles of said first luminescent material has a diameter of less than 4 nm, preferably less than 3 nm; and/or wherein said core of said particles of said second luminescent material has a diameter of less than 4 nm, preferably less than 3 nm.

18. Method according to any one of claims 14 to 17, wherein the core and shell of the particles of the first luminescent material are comprised of the same host material and/or wherein the core and the shell of the particles of the second luminescent material are comprised of the same host material, preferably wherein said luminescent material allows non-radiative energy transfer from said second luminescent material to said first luminescent material.

19. Luminescent material or luminescent composition obtainable by the method according to any one preceding claim.

20. Light-emitting device, said light emitting device comprising the luminescent material according to claim 19, preferably wherein light-emitting device further comprises an excitation source for the luminescent material, such as for the second luminescent material.

21. A lighting system comprising a light emitting device according to claim 20, preferably, wherein the lighting system is selected from the group consisting of a lamp or luminaire, office lighting systems, household application systems shop lighting systems, home lighting systems, accent lighting systems, spot lighting systems, theater lighting systems, fiber-optics application systems, projection systems, self-lit display systems, pixelated display systems, segmented display systems, warning sign systems, medical lighting application systems, indicator sign systems, and decorative lighting systems, portable systems, automotive applications and green house lighting systems.

## Patentansprüche

1. Verfahren zum Behandeln eines Leuchtstoffs, umfassend organische Liganden, das Verfahren umfassend ein Inkontaktbringen des Leuchtstoffs, umfassend organische Liganden, mit einem Oxidationsmittel, wobei der Leuchtstoff, umfassend organische Liganden, eine Mischung ist, umfassend mindestens einen ersten Leuchtstoff und einen zweiten Leuchtstoff, und wobei der erste Leuchtstoff und/oder der zweite Leuchtstoff organische Liganden umfassen, und wobei der Leuchtstoff in Form von Nanopartikeln vorliegt und ein Wirtsgitter umfasst, das mit Ionen dotiert ist, und wobei das Inkontaktbringen in der Gegenwart einer Lösung erfolgt, umfassend das Oxidationsmittel, wobei die Lösung Wasser oder einen Alkohol oder eine Mischung davon umfasst.

2. Verfahren nach Anspruch 1, wobei der D₅₀-Wert der Nanopartikel zwischen ≥ 1 nm und ≤ 100 nm liegt.

3. Verfahren nach einem der vorstehenden Ansprüche, wobei das Oxidationsmittel ein Standardreduktionspotential von > 1 Volt aufweist und/oder wobei das Oxidationsmittel H₂O₂ umfasst.

4. Verfahren nach einem der vorstehenden Ansprüche, ferner umfassend ein Trennen des Leuchtstoffs von dem Oxidationsmittel.

5. Verfahren nach einem der vorstehenden Ansprüche, wobei die Lösung NH₄OH umfasst.

6. Verfahren nach einem der vorstehenden Ansprüche, das ferner ein Rückgewinnen des Leuchtstoffs aus der Lösung umfasst, vorzugsweise wobei das Rückgewinnen des Leuchtstoffs aus der Lösung eine Schwerkrafttrennung (vorzugsweise Zentrifugation) und/oder ein Trocknen durch Verdampfung umfasst, und/oder wobei das Rückgewinnen des Leuchtstoffs aus der Lösung ein Waschen des Leuchtstoffs unter Verwendung einer Waschflüssigkeit und das Rückgewinnen des Leuchtstoffs aus der Waschflüssigkeit umfasst, vorzugsweise wobei das Rückgewinnen des Leuchtstoffs aus der Waschflüssigkeit die Schwerkrafttrennung (vorzugsweise durch Zentrifugation) und/oder das Trocknen durch Verdampfung umfasst.

7. Verfahren nach Anspruch 1, wobei der erste Leuchtstoff und der zweite Leuchtstoff organische Liganden umfassen.

8. Verfahren zum Behandeln eines Leuchtstoffs, umfassend organische Liganden, das Verfahren umfassend:
(a) Entfernen von mindestens einem Teil der organischen Liganden aus dem Leuchtstoff nach dem Verfahren nach einem der Ansprüche 1 bis 7; und
(b) nach (a) Glühen des Leuchtstoffs.

9. Verfahren zum Herstellen einer Leuchtzusammensetzung, das Verfahren umfassend:
(i) Bereitstellen eines ersten Leuchtstoffs und eines zweiten Leuchtstoffs;
(ii) Dispergieren des ersten Leuchtstoffs und des zweiten Leuchtstoffs in einer Flüssigkeit, wobei die Flüssigkeit Wasser oder einen Alkohol oder eine Mischung davon umfasst;
(iii) Entfernen organischer Liganden aus dem ersten Leuchtstoff und/oder aus dem zweiten Leuchtstoff durch Inkontaktbringen des Leuchtstoffs, umfassend die organischen Liganden, mit einem Oxidationsmittel, wobei der Leuchtstoff in Form von Nanopartikeln vorliegt und ein Wirtsgitter umfasst, das mit Ionen dotiert ist, und wobei das Inkontaktbringen in der Gegenwart einer Lösung erfolgt, umfassend das Oxidationsmittel, wobei die Lösung Wasser oder einen Alkohol oder eine Mischung davon umfasst;
(iv) Entfernen der Flüssigkeit, was zu einem getrockneten Produkt führt, wobei das Entfernen die Verdampfung umfasst; und
(v) Schmelzen des getrockneten Produkts.

10. Verfahren nach einem der Ansprüche 1 bis 7 oder 9, wobei der erste Leuchtstoff und der zweite Leuchtstoff derart ausgewählt werden, dass der zweite Leuchtstoff ein Emissionsspektrum aufweist, das sich mindestens teilweise mit einem oder mehreren Anregungsbändern des ersten Leuchtstoffs überschneidet.

11. Verfahren nach einem der Ansprüche 1 bis 7 oder 9 bis 10, wobei der erste Leuchtstoff ein rot emittierender Stoff ist, vorzugsweise wobei der erste Leuchtstoff mit einem oder mehreren Ionen dotiert ist, die aus der Gruppe ausgewählt sind, bestehend aus Eu³⁺, Tb³⁺, Mn⁴⁺.

12. Verfahren nach einem der Ansprüche 1 bis 7 oder 9 bis 11, wobei der zweite Leuchtstoff in dem Wellenlängenbereich zwischen 380 und 580 nm anregbar ist, vorzugsweise wobei der zweite Leuchtstoff in dem Wellenlängenbereich UV-A (315 bis 400 nm), Violett (400 bis 440 nm), Blau (440 bis 480 nm) oder Grün (510 bis 560 nm) anregbar ist, vorzugsweise in dem Wellenlängenbereich Blau (440 bis 480 nm), vorzugsweise wobei der zweite Leuchtstoff mit einem oder mehreren Ionen dotiert ist, die aus der Gruppe ausgewählt sind, bestehend aus Eu²⁺, Pb²⁺, Bi³⁺ und Ce³⁺, mehr bevorzugt wobei der zweite Leuchtstoff Y₃Al₅O₁₂:Ce ³⁺ ("YAG:Ce") oder Lu₃Al₅O₁₂:Ce³⁺ ("LuAG:Ce") oder eine Kombination davon.

13. Verfahren nach einem der Ansprüche 8 bis 12, wobei das Schmelzen bei einer Temperatur zwischen 200 und 1500 °C vollzogen wird.

14. Verfahren nach einem der Ansprüche 1 bis 7 oder 9 bis 13, wobei
(i) der erste Leuchtstoff in Form von Partikeln, vorzugsweise Nanopartikeln, vorliegt, wobei der erste Leuchtstoff erste Dotierungsionen umfasst, wobei die Partikel einen Kern umfassen, der durch eine Schale umgeben ist, und wobei die Konzentration der ersten Dotierungsionen in der Schale niedriger als die Konzentration der ersten Dotierungsionen in dem Kern ist; und/oder
(ii) der zweite Leuchtstoff in Form von Partikeln, vorzugsweise Nanopartikeln, vorliegt, wobei der zweite Leuchtstoff zweite Dotierungsionen umfasst, wobei die Partikel einen Kern umfassen, der durch eine Schale umgeben ist, und wobei die Konzentration der zweiten Dotierungsionen in der Schale niedriger als die Konzentration der zweiten Dotierungsionen in dem Kern ist.

15. Verfahren nach einem der Ansprüche 7 oder 9 bis 14, ferner umfassend
(i) Erhalten des ersten Leuchtstoffs durch ein Verfahren, das das Bereitstellen von Partikeln, vorzugsweise Nanopartikeln, die mit ersten Dotierungsionen dotiert sind, und ein Züchten einer Schale um die Partikel umfasst; und/oder
(ii) Erhalten des zweiten Leuchtstoffs durch ein Verfahren, das das Bereitstellen von Partikeln, vorzugsweise Nanopartikeln, die mit zweiten Dotierungsionen dotiert sind, und das Züchten einer Schale um die Partikel umfasst.

16. Verfahren nach Anspruch 14 oder 15, wobei die Schale der Partikel des ersten Leuchtstoffs frei von den ersten Dotierungsionen ist und/oder wobei die Schale der Partikel des zweiten Leuchtstoffs frei von den zweiten Dotierungsionen ist.

17. Verfahren nach einem der Ansprüche 14 bis 16, wobei
- die Schale der Partikel des ersten Leuchtstoffs eine Dicke zwischen 2 und 6 nm, vorzugsweise zwischen 3 und 5 nm, aufweist und/oder wobei die Schale der Partikel des zweiten Leuchtstoffs eine Dicke zwischen 2 und 6 nm, vorzugsweise zwischen 3 und 5 nm, aufweist und/oder
- der Kern der Partikel des ersten Leuchtstoffs einen Durchmesser von weniger als 4 nm, vorzugsweise weniger als 3 nm, aufweist; und/oder wobei der Kern der Partikel des zweiten Leuchtstoffs einen Durchmesser von weniger als 4 nm, vorzugsweise weniger als 3 nm, aufweist.

18. Verfahren nach einem der Ansprüche 14 bis 17, wobei der Kern und die Schale der Partikel des ersten Leuchtstoffs aus demselben Wirtsstoff bestehen
und/oder wobei der Kern und die Schale der Partikel des zweiten Leuchtstoffs aus demselben Wirtsstoff bestehen, vorzugsweise wobei der Leuchtstoff einen strahlungslosen Energietransfer von dem zweiten Leuchtstoff zu dem ersten Leuchtstoff ermöglicht.

19. Leuchtstoff oder Leuchtzusammensetzung, der/die durch das Verfahren nach einem der vorstehenden Ansprüche erhältlich ist.

20. Lichtemittierende Vorrichtung, die lichtemittierende Vorrichtung umfassend den Leuchtstoff nach Anspruch 19, vorzugsweise wobei die lichtemittierende Vorrichtung ferner eine Anregungsquelle für den Leuchtstoff, wie für den zweiten Leuchtstoff, umfasst.

21. Beleuchtungssystem, umfassend eine lichtemittierende Vorrichtung nach Anspruch 20, vorzugsweise wobei das Beleuchtungssystem aus der Gruppe ausgewählt ist, bestehend aus einer Lampe oder einer Leuchte, Bürobeleuchtungssystemen, Haushaltsanwendungssystemen, Ladenbeleuchtungssystemen, Heimbeleuchtungssystemen, Akzentbeleuchtungssystemen, Spotbeleuchtungssystemen, Theaterbeleuchtungssystemen, Glasfaseranwendungssystemen, Projektionssystemen, selbstleuchtenden Anzeigesystemen, pixeligen Anzeigesystemen, segmentierten Anzeigesystemen, Warnschildsystemen, medizinischen Beleuchtungsanwendungssystemen, Hinweisschildsystemen und dekorativen Beleuchtungssystemen, tragbaren Systemen, Automobilanwendungen und Gewächshausbeleuchtungssystemen.

## Revendications

1. Procédé de traitement d'une substance luminescente comprenant des ligands organiques, ledit procédé comprenant la mise en contact de ladite substance luminescente comprenant des ligands organiques avec un agent oxydant, dans lequel ladite substance luminescente comprenant des ligands organiques est un mélange comprenant au moins une première substance luminescente et une seconde substance luminescente, et dans lequel la première substance luminescente et/ou la seconde substance luminescente comprennent des ligands organiques, et dans lequel ladite substance luminescente est sous la forme de nanoparticules et comprend un réseau hôte dopé avec des ions, et dans lequel ladite mise en contact est effectuée en présence d'une solution comprenant l'agent oxydant, dans lequel ladite solution comprend de l'eau ou un alcool ou un mélange de ceux-ci.

2. Procédé selon la revendication 1, dans lequel la valeur D₅₀ des nanoparticules est ≥ 1 nm et ≤ 100 nm.

3. Procédé selon l'une quelconque revendication précédente, dans lequel ledit agent oxydant a un potentiel de réduction normal de > 1 volt, et/ou dans lequel l'agent oxydant comprend du H₂O₂.

4. Procédé selon l'une quelconque revendication précédente, comprenant en outre la séparation de ladite substance luminescente de l'agent oxydant.

5. Procédé selon l'une quelconque revendication précédente, dans lequel ladite solution comprend du NH₄OH.

6. Procédé selon l'une quelconque revendication précédente, comprenant en outre la récupération de ladite substance luminescente à partir de ladite solution, de préférence dans lequel ladite récupération de ladite substance luminescente à partir de la solution comprend une séparation par gravité (de préférence par centrifugation) et/ou un séchage par évaporation, et/ou dans lequel ladite récupération de ladite substance luminescente à partir de la solution comprend le lavage de ladite substance luminescente à l'aide d'un liquide de lavage et la récupération de ladite substance luminescente à partir dudit liquide de lavage, de préférence dans lequel ladite récupération de ladite substance luminescente à partir dudit liquide de lavage comprend une séparation par gravité (de préférence par centrifugation) et/ou un séchage par évaporation.

7. Procédé selon la revendication 1, dans lequel la première substance luminescente et la seconde substance luminescente comprennent des ligands organiques.

8. Procédé de traitement d'une substance luminescente comprenant des ligands organiques, ledit procédé comprenant :
(a) le fait de retirer au moins une partie desdits ligands organiques de la substance luminescente selon le procédé selon l'une quelconque des revendications 1 à 7 ; et
(b) après (a), le recuit de ladite substance luminescente.

9. Procédé de préparation d'une composition luminescente, ledit procédé comprenant :
(i) la fourniture d'une première substance luminescente et d'une seconde substance luminescente ;
(ii) la dispersion de ladite première substance luminescente et de ladite seconde substance luminescente dans un liquide, dans lequel ledit liquide comprend de l'eau ou un alcool ou un mélange de ceux-ci ;
(iii) le fait de retirer des ligands organiques de ladite première substance luminescente et/ou de ladite seconde substance luminescente en mettant en contact ladite substance luminescente comprenant des ligands organiques avec un agent oxydant, dans lequel ladite substance luminescente est sous la forme de nanoparticules et comprend un réseau hôte dopé par des ions, et dans lequel ladite mise en contact est effectuée en présence d'une solution comprenant l'agent oxydant, dans lequel ladite solution comprend de l'eau ou un alcool ou un mélange de ceux-ci ;
(iv) le fait de retirer ledit liquide, de manière à obtenir un produit séché, dans lequel ledit fait de retirer comprend une évaporation ; et
(v) le recuit dudit produit séché.

10. Procédé selon l'une quelconque des revendications 1 à 7 ou 9, dans lequel ladite première substance luminescente et ladite seconde substance luminescente sont choisies de telle sorte que ladite seconde substance luminescente a un spectre d'émission qui chevauche au moins partiellement une ou plusieurs bandes d'excitation de la première substance luminescente.

11. Procédé selon l'une quelconque des revendications 1 à 7 ou 9 à 10, dans lequel ladite première substance luminescente est une substance émettant du rouge, de préférence dans lequel ladite première substance luminescente est dopée avec un ou plusieurs ions choisis dans le groupe constitué de Eu³⁺, Tb³⁺, Mn⁴⁺.

12. Procédé selon l'une quelconque des revendications 1 à 7 ou 9 à 11, dans lequel ladite seconde substance luminescente est excitable dans la gamme de longueurs d'onde allant de 380 à 580 nm, de préférence dans lequel ladite seconde substance luminescente est excitable dans la gamme de longueurs d'onde UV-A (315 à 400 nm), violette (400 à 440 nm), bleue (440 à 480 nm) ou verte (510 à 560 nm), de préférence dans la gamme des longueurs d'onde bleue (440 à 480 nm), de préférence dans lequel ladite seconde substance luminescente est dopée avec un ou plusieurs ions choisis dans le groupe constitué de Eu²⁺, Pb²⁺, Bi³⁺ et Ce³⁺, plus préférablement dans lequel ladite seconde substance luminescente est Y₃Al₅O₁₂:Ce³⁺ (« YAG:Ce ») ou Lu₃ Al₅O₁₂:Ce³⁺ (« LuAG:Ce ») ou une combinaison de ceux-ci.

13. Procédé selon l'une quelconque des revendications 8 à 12, dans lequel ledit recuit est réalisé à une température comprise entre 200 et 1500 °C.

14. Procédé selon l'une quelconque des revendications 1 à 7 ou 9 à 13, dans lequel
(i) ladite première substance luminescente est sous la forme de particules, de préférence de nanoparticules, dans lequel ladite première substance luminescente comprend de premiers ions de dopage, dans lequel lesdites particules comprennent un noyau entouré d'une enveloppe, et dans lequel la concentration desdits premiers ions de dopage dans ladite enveloppe est inférieure à la concentration desdits premiers ions de dopage dans ledit noyau ; et/ou
(ii) ladite seconde substance luminescente est sous la forme de particules, de préférence de nanoparticules, dans lequel ladite seconde substance luminescente comprend de seconds ions de dopage, dans lequel lesdites particules comprennent un noyau entouré d'une enveloppe, et dans lequel la concentration desdits seconds ions de dopage dans ladite enveloppe est inférieure à la concentration desdits seconds ions de dopage dans ledit noyau.

15. Procédé selon l'une quelconque des revendications 7 ou 9 à 14, comprenant en outre
(i) l'obtention de ladite première substance luminescente par un procédé qui comprend la fourniture de particules, de préférence de nanoparticules, dopées avec de premiers ions de dopage, et le développement d'une enveloppe autour desdites particules ; et/ou
(ii) l'obtention de ladite seconde substance luminescente par un procédé qui comprend la fourniture de particules, de préférence de nanoparticules, dopées avec de seconds ions de dopage, et le développement d'une enveloppe autour desdites particules.

16. Procédé selon la revendication 14 ou 15, dans lequel ladite enveloppe desdites particules de ladite première substance luminescente est exempte desdits premiers ions de dopage et/ou dans lequel ladite enveloppe desdites particules de ladite seconde substance luminescente est exempte desdits seconds ions de dopage.

17. Procédé selon l'une quelconque des revendications 14 à 16, dans lequel
- ladite enveloppe desdites particules de ladite première substance luminescente a une épaisseur comprise entre 2 et 6 nm, de préférence entre 3 et 5 nm, et/ou dans lequel ladite enveloppe desdites particules de ladite seconde substance luminescente a une épaisseur comprise entre 2 et 6 nm, de préférence entre 3 et 5 nm, et/ou
- ledit noyau desdites particules de ladite première substance luminescente a un diamètre inférieur à 4 nm, de préférence inférieur à 3 nm ; et/ou dans lequel ledit noyau desdites particules de ladite seconde substance luminescente a un diamètre inférieur à 4 nm, de préférence inférieur à 3 nm.

18. Procédé selon l'une quelconque des revendications 14 à 17, dans lequel le noyau et l'enveloppe des particules de la première substance luminescente sont constitués de la même substance hôte
et/ou dans lequel le noyau et l'enveloppe des particules de la seconde substance luminescente sont constitués de la même substance hôte, de préférence dans lequel ladite substance luminescente permet un transfert d'énergie non radiatif de ladite seconde substance luminescente vers ladite première substance luminescente.

19. Substance luminescente ou composition luminescente pouvant être obtenue par le procédé selon l'une quelconque revendication précédente.

20. Dispositif émetteur de lumière, ledit dispositif émetteur de lumière comprenant la substance luminescente selon la revendication 19, de préférence dans lequel le dispositif émetteur de lumière comprend en outre une source d'excitation pour la substance luminescente, telle que pour la seconde substance luminescente.

21. Système d'éclairage comprenant un dispositif émetteur de lumière selon la revendication 20, de préférence dans lequel le système d'éclairage est choisi dans le groupe constitué d'une lampe ou luminaire, systèmes d'éclairage de bureau, systèmes d'application domestique, systèmes d'éclairage de magasin, systèmes d'éclairage domestique, systèmes d'éclairage qui accentue, systèmes d'éclairage local, systèmes d'éclairage de théâtre, systèmes d'application de fibre optique, systèmes de projection, systèmes d'affichage auto-éclairé, systèmes d'affichage pixellisé, systèmes d'affichage segmenté, systèmes de panneau d'avertissement, systèmes d'application d'éclairage médical, systèmes de panneau d'indication, et systèmes d'éclairage décoratif, systèmes portables, systèmes d'applications automobiles et systèmes d'éclairage de serre.
